(19) **Europäisches Patentamt / European Patent Office / Office européen des brevets**

(11) **EP 4 654 657 A1**

(12) **EUROPEAN PATENT APPLICATION**
published in accordance with Art. 153(4) EPC

(43) Date of publication:
26.11.2025 Bulletin 2025/48

(21) Application number: 24756251.5

(22) Date of filing: 07.02.2024

(51) International Patent Classification (IPC):
*H04W 24/10* (2009.01)

(52) Cooperative Patent Classification (CPC):
**H04W 16/28; H04W 24/10**

(86) International application number:
**PCT/CN2024/076705**

(87) International publication number:
**WO 2024/169878 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 15.02.2023 CN 202310132569

(71) Applicant: Vivo Mobile Communication Co., Ltd.
Dongguan, Guangdong 523863 (CN)

(72) Inventors:
• ZHOU, Tong
Dongguan, Guangdong 523863 (CN)
• WU, Hao
Dongguan, Guangdong 523863 (CN)
• SHI, Yuan
Dongguan, Guangdong 523863 (CN)

(74) Representative: **Murgitroyd & Company**
**165-169 Scotland Street**
**Glasgow G5 8PL (GB)**

(54) **BEAM PREDICTION REPORTING METHOD AND APPARATUS, USER EQUIPMENT, AND STORAGE MEDIUM**

(57) This application discloses a beam prediction reporting method and apparatus, user equipment, and a storage medium, and belongs to the field of communication technologies. The method includes: sending a beam feedback report, including first information and second information, where the first information and the second information are related information of M beam identifiers, and the M beam identifiers are different beam identifiers in N TUs corresponding to a beam prediction reporting window; the first information includes at least one of the following: a quantity indicator of the M beam identifiers, a quantity indicator of target beam identifiers, and a beam identifier of an optimal beam; the second information includes at least one of the following: a beam identifier indication, a TU location indicator of a beam identifier, and a TU quantity indicator of a beam identifier; the TU location indicator of the beam identifier indicates at least one of the following: a location of a beam identifier in the N TUs, whether a beam identifier is reported in the N TUs, and a quantity of TUs of a beam identifier; and the TU quantity indicator of the beam identifier indicates a quantity of TU locations included for each beam identifier.

```
┌─────────────────────────────────────────────────────┐
│           UE performs beam prediction                 │── 201
└─────────────────────────────────────────────────────┘
                          │
                          ▼
┌─────────────────────────────────────────────────────┐
│  The UE sends a beam feedback report, the beam        │
│  feedback report includes first information and       │
│  second information, the first information and the    │── 202
│  second information are related information of M beam  │
│  identifiers, and the M beam identifiers are          │
│  different beam identifiers in N TUs corresponding    │
│  to a beam prediction reporting window                │
└─────────────────────────────────────────────────────┘
```

**FIG. 2**

EP 4 654 657 A1

**EP 4 654 657 A1**

**Description**

**CROSS-REFERENCE TO RELATED APPLICATIONS**

This application claims priority to Chinese Patent Application No. 202310132569.2, filed on February 15, 2023 in China, which is incorporated herein by reference in its entirety.

**TECHNICAL FIELD**

This application belongs to the field of communication technologies, and in particular, to a beam prediction reporting method and apparatus, user equipment, and a storage medium.

**BACKGROUND**

Artificial intelligence (Artificial Intelligence, AI) has been widely used in various fields. Integrating AI into the wireless communication network is an important technology of the wireless communication system. For example, at the physical layer, there is AI-based channel state information (Channel State Information, CSI) feedback compression, AI-based beam management, AI-based positioning, or other technologies.
In AI-based beam management or beam prediction, if model reasoning is carried out on a terminal side, a transmitted beam identifier with a strongest predicted beam quality needs to be reported to a base station. If the existing reporting mechanism is followed to report several strongest beam qualities corresponding to all predicted time units (Time Unit, TU) in the future and corresponding beam identifiers, a bit overhead required for feedback is too large. Therefore, how to reduce the overhead of reporting beam identifiers is an urgent problem that needs to be resolved.

**SUMMARY**

Embodiments of this application provide a beam prediction reporting method and apparatus, user equipment, and a storage medium, which can solve the problem of how to reduce an overhead of reporting beam identifiers.
According to a first aspect, a beam prediction reporting method is provided, and the method includes: sending a beam feedback report, where the beam feedback report includes first information and second information, the first information and the second information are related information of M beam identifiers, the M beam identifiers are different beam identifiers in N TUs corresponding to a beam prediction reporting window, and both N and M are positive integers. The first information includes at least one of the following: a quantity indicator of the M beam identifiers, a quantity indicator of target beam identifiers in the M beam identifiers, and a beam identifier of an optimal beam. The second information includes at least one of the following: a beam identifier indication, a TU location indicator of a beam identifier, and a TU quantity indicator of a beam identifier; the beam identifier indication indicates beam identifiers included in the N TUs; the TU location indicator of the beam identifier indicates at least one of the following: a location of a beam identifier in the N TUs, whether a beam identifier is reported in the N TUs, and a quantity of TUs of a beam identifier; and the TU quantity indicator of the beam identifier indicates a quantity of TU locations included for each of the M beam identifiers.
According to a second aspect, a beam prediction reporting apparatus is provided, and the beam prediction reporting apparatus includes: a sending module. The sending module is configured to send a beam feedback report, the beam feedback report includes first information and second information, the first information and the second information are related information of M beam identifiers, the M beam identifiers are different beam identifiers in N TUs corresponding to a beam prediction reporting window, and both N and M are positive integers. The first information includes at least one of the following: a quantity indicator of the M beam identifiers, a quantity indicator of target beam identifiers in the M beam identifiers, and a beam identifier of an optimal beam. The second information includes at least one of the following: a beam identifier indication, a TU location indicator of a beam identifier, and a TU quantity indicator of a beam identifier; the beam identifier indication indicates beam identifiers included in the N TUs; the TU location indicator of the beam identifier indicates at least one of the following: a location of a beam identifier in the N TUs, whether a beam identifier is reported in the N TUs, and a quantity of TUs of a beam identifier; and the TU quantity indicator of the beam identifier indicates a quantity of TU locations included for each of the M beam identifiers.
According to a third aspect, user equipment (User Equipment, UE) is provided. The UE includes a processor and a memory, the memory stores a program or an instruction that can be run on the processor, and when the program or the instruction is executed by the processor, the steps of the method according to the first aspect are implemented.
According to a fourth aspect, UE is provided, including a processor and a communication interface, where the communication interface is configured to send a beam feedback report, the beam feedback report includes first information and second information, the first information and the second information are related information of M beam identifiers, the M beam identifiers are different beam identifiers in N time units (TU) corresponding to a beam prediction

2

reporting window, and both N and M are positive integers. The first information includes at least one of the following: a quantity indicator of the M beam identifiers, a quantity indicator of target beam identifiers in the M beam identifiers, and a beam identifier of an optimal beam. The second information includes at least one of the following: a beam identifier indication, a TU location indicator of a beam identifier, and a TU quantity indicator of a beam identifier; the beam identifier indication indicates beam identifiers included in the N TUs; the TU location indicator of the beam identifier indicates at least one of the following: a location of a beam identifier in the N TUs, whether a beam identifier is reported in the N TUs, and a quantity of TUs of a beam identifier; and the TU quantity indicator of the beam identifier indicates a quantity of TU locations included for each of the M beam identifiers.

According to a fifth aspect, a readable storage medium is provided. The readable storage medium stores a program or an instruction, and the program or the instruction is executed by a processor to implement the steps of the method according to the first aspect.

According to a sixth aspect, a chip is provided. The chip includes a processor and a communication interface, the communication interface is coupled to the processor, and the processor is configured to run a program or an instruction to implement the method according to the first aspect.

According to a seventh aspect, a computer program/program product is provided. The computer program/program product is stored in a storage medium, and the computer program/program product is executed by at least one processor to implement the steps of the beam prediction reporting method according to the first aspect.

In the embodiments of this application, UE may send a beam feedback report, and the beam feedback report includes first information and second information of M beam identifiers. The first information includes at least one of the following: a quantity indicator of the M beam identifiers, a quantity indicator of target beam identifiers, and a beam identifier of an optimal beam. The second information includes at least one of the following: a beam identifier indication, a TU location indicator of a beam identifier, and a TU quantity indicator of a beam identifier. In this solution, after performing beam prediction, UE reports related information of M beam identifiers corresponding to N TUs corresponding to a beam prediction reporting window in the form of beam feedback report, that is, beam reporting includes two parts, namely, the first information and the second information. Therefore, in this solution, time correlation of M beam identifiers corresponding to beam prediction is used to compress an overhead of beam identifier reporting, thereby reducing the overhead of beam identifier reporting.

## BRIEF DESCRIPTION OF DRAWINGS

FIG. 1 is a schematic architecture diagram of a wireless communication system according to an embodiment of this application;

FIG. 2 is a flowchart of a beam prediction reporting method according to an embodiment of this application;

FIG. 3 is a first schematic diagram of an example of a discontinuous reporting manner according to an embodiment of this application;

FIG. 4 is a second schematic diagram of an example of a discontinuous reporting manner according to an embodiment of this application;

FIG. 5 is a schematic diagram of an example of a simplified reporting manner according to an embodiment of this application;

FIG. 6 is a schematic diagram of an example of a continuous reporting manner according to an embodiment of this application;

FIG. 7 is a schematic diagram of an example of a full-TU and continuous reporting manner according to an embodiment of this application;

FIG. 8 is a schematic diagram of a structure of a beam prediction reporting apparatus according to an embodiment of this application;

FIG. 9 is a schematic diagram of a hardware structure of a communication device according to an embodiment of this application; and

FIG. 10 is a schematic diagram of a hardware structure of UE according to an embodiment of this application.

## DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

Terms such as "first" and "second" in this application are used to distinguish between similar objects, and are not used to describe a specific order or sequence. It should be understood that, the terms used in such a way are interchangeable in proper circumstances, so that the embodiments of this application can be implemented in an order other than the order illustrated or described herein. Objects classified by "first" and "second" are usually of a same type, and a quantity of objects is not limited. For example, there may be one or more first objects. In addition, in this application, "or" indicates at least one of connected objects. For example, "A or B" covers three solutions, namely, solution 1: including A and not including B; solution 2: including B and not including A; and solution 3: including A and B. A character "/" generally indicates an "or" relationship between the associated objects.

The term "indication" in this application may be either a direct indication (or referred to as an explicit indication) or an indirect indication (or referred to as an implicit indication). The direct indication can be understood as that a sender clearly informs a receiver of specific information, an operation required to be performed, a request result, or the like in a sent indication; and the indirect indication can be understood as that the receiver determines corresponding information based on an indication sent by the sender, or makes a determination and determines the operation required to be performed, the request result, or the like based on a determination result.

It should be noted that technologies described in the embodiments of this application are not limited to a Long Term Evolution (Long Term Evolution, LTE)/LTE-Advanced (LTE-Advanced, LTE-A) system, and may be further applied to other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), or other systems. The terms "system" and "network" in the embodiments of this application may be used interchangeably. The technologies described can be applied to both the systems and the radio technologies mentioned above as well as to other systems and radio technologies. The following descriptions describe a new radio (New Radio, NR) system for example purposes, and NR terms are in most of the following descriptions, but these technologies can also be applied to a system other than the NR system, for example, a 6th generation (6th Generation, 6G) communication system.

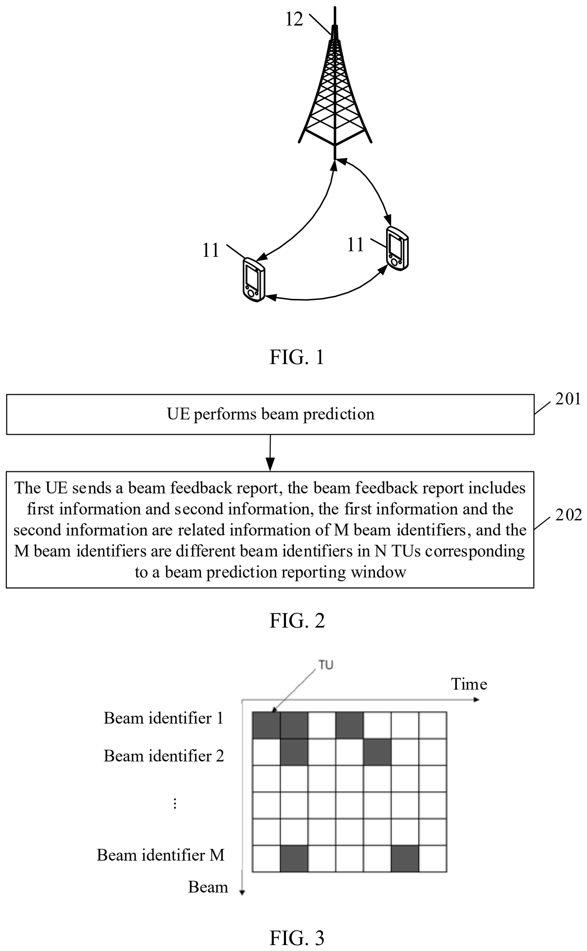

FIG. 1 is a block diagram of a wireless communication system to which the embodiments of this application may be applied. The wireless communication system includes UE 11 and a network side device 12. The UE 11 may be a terminal side device such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR) or virtual reality (Virtual Reality, VR) device, a robot, a wearable device (Wearable Device), a flight vehicle (flight vehicle), vehicle user equipment (Vehicle User Equipment, VUE), ship-borne equipment, pedestrian user equipment (Pedestrian User Equipment, PUE), smart household (household devices with wireless communication functions, such as a refrigerator, a television, a washing machine, or furniture), a game console, a personal computer (Personal Computer, PC), a teller machine, or a self-service machine. The wearable device includes: a smart watch, a smart band, a smart headset, smart glasses, smart jewelry (a smart bracelet, a smart hand chain, a smart ring, a smart necklace, a smart bangle, a smart anklet, and the like), a smart wristband, smart clothing, and the like. The vehicle user equipment may also be referred to as a vehicle-mounted terminal, a vehicle-mounted controller, a vehicle-mounted module, a vehicle-mounted component, a vehicle-mounted chip, a vehicle-mounted unit, or the like. It should be noted that a specific type of the UE 11 is not limited in the embodiments of this application. The network side device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, Wi-Fi) node, and the like. The base station may be referred to as a NodeB (NodeB, NB), an evolved NodeB (Evolved NodeB, eNB), the next generation NodeB (the next generation NodeB, gNB), a new radio NodeB (New Radio NodeB, NR NodeB), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home NodeB, HNB), a home evolved NodeB (home evolved NodeB), a transmission reception point (Transmission Reception Point, TRP), or another appropriate term in the field. As long as a same technical effect is achieved, the base station is not limited to a specified technical term. It should be noted that, in the embodiments of this application, only a base station in an NR system is used as an example for description, but a specific type of the base station is not limited.

The following describes some concepts and/or terms in a beam prediction reporting method and apparatus, user equipment, and a storage medium provided in the embodiments of this application.

1. Reporting of an existing measurement beam

According to the existing protocol, for measurement beam reporting, reporting a layer 1 reference signal received power (Layer 1 Reference Signal Received Power, L1-RSRP) is used as an example. In addition to reporting the beam L1-RSRP, a corresponding CSI resource set further needs to be indicated, or a channel state information reference signal resource indicator (CSI-Reference Signal Resource Indicator, CRI), or a synchronization signal block resource indicator (Synchronization Signal Block Resource Indicator, SSBRI). The CRI or SSBRI may indirectly indicate a beam identifier.

2. Reporting of a predicted beam

A simple manner for reporting a predicted beam is to report a strongest beam quality corresponding to each predicted time unit, and corresponding transmitted beam identifier indication information. Because a predicted beam identifier is probably different from a transmitted beam identifier corresponding to a measurement resource, additional transmitted beam identifier indication information is needed to replace a measurement resource identifier.

With reference to the accompanying drawings, a beam prediction reporting method provided in the embodiments of this application is described in detail by using some embodiments and application scenarios thereof.

As in the background, if the existing reporting mechanism is followed to report several strongest beam qualities corresponding to all predicted TUs in the future and corresponding beam identifiers, a bit overhead required for feedback is too large. Therefore, how to reduce the overhead of reporting beam identifiers is an urgent problem that needs to be resolved.

An embodiment of this application provides a beam prediction reporting method. UE may send a beam feedback report, and the beam feedback report includes first information and second information of M beam identifiers. The first information includes at least one of the following: a quantity indicator of the M beam identifiers, a quantity indicator of target beam identifiers, and a beam identifier of an optimal beam. The second information includes at least one of the following: a beam identifier indication, a TU location indicator of a beam identifier, and a TU quantity indicator of a beam identifier. In this solution, after performing beam prediction, UE reports related information of M beam identifiers corresponding to N TUs corresponding to a beam prediction reporting window in the form of beam feedback report, that is, beam reporting includes two parts, namely, the first information and the second information. Therefore, in this solution, time correlation of M beam identifiers corresponding to beam prediction is used to compress an overhead of beam identifier reporting, thereby reducing the overhead of beam identifier reporting.

An embodiment of this application provides a beam prediction reporting method, and FIG. 2 is a flowchart of a beam prediction reporting method according to an embodiment of this application. As shown in FIG. 2, the beam prediction reporting method provided in this embodiment of this application may include the following step 201 and step 202.

Step 201: UE performs beam prediction.

Step 202: The UE sends a beam feedback report.

In this embodiment of this application, the beam feedback report includes first information and second information, the first information and the second information are related information of M beam identifiers, the M beam identifiers are different beam identifiers in N TUs corresponding to a beam prediction reporting window, and both N and M are positive integers.

The first information includes at least one of the following: a quantity indicator of the M beam identifiers, a quantity indicator of target beam identifiers in the M beam identifiers, and a beam identifier of an optimal beam.

The second information includes at least one of the following: a beam identifier indication, a TU location indicator of a beam identifier, and a TU quantity indicator of a beam identifier; the beam identifier indication indicates beam identifiers included in the N TUs; the TU location indicator of the beam identifier indicates at least one of the following: a location of a beam identifier in the N TUs, whether a beam identifier is reported in the N TUs, and a quantity of TUs of a beam identifier; and the TU quantity indicator of the beam identifier indicates a quantity of TU locations included for each of the M beam identifiers.

In this embodiment of this application, after performing beam prediction, UE may report related information of M beam identifiers corresponding to N TUs corresponding to a beam prediction reporting window in the form of beam feedback report, namely, the first information and the second information.

It should be noted that in this embodiment of this application, a quantity of the beam prediction reporting windows, that is, TUs, is N, for example, N=8,4,1. A quantity of beam identifiers reported by each TU is R, for example, R=4,8. A quantity of beam identifiers to be predicted by each TU is L, for example, L=64,128. A quantity of indicator bits of each beam identifier is K. A quantity of different beam identifiers included in the beam prediction reporting window is M, that is, M is a quantity of different beam identifiers included in the beam prediction reporting window.

It should be noted that the TU can be referred to as a unit of time, a time unit, or a time interval.

Optionally, the beam in this embodiment of this application may represent an identifier of a reference signal or an SSB, a quasi co location (Quasi Co Location, QCL), a transmission configuration indication (Transmission Configuration Indication, TCI), or other information.

Optionally, in this embodiment of this application, the beam identifier includes at least one of the following: a beam angle, a beam identity indicator, a beam resource identifier, a beam resource set identifier, a beam index, a beam resource index, and a beam resource set index.

Optionally, in this embodiment of this application, the quantity of the beam identifiers includes at least one of the following: a quantity of beam pair identifiers, a quantity of transmitted beam identifiers, and a quantity of received beam identifiers.

Optionally, in this embodiment of this application, the quantity indicator of the target beam identifiers includes at least one of the following: a TU quantity indicator corresponding to a first beam identifier, a quantity indicator of full-TU beam identifiers, and a TU quantity indicator of a second beam identifier.

The first beam identifier is a beam identifier corresponding to a largest quantity of TU locations in the M beam identifiers; and the second beam identifier is a beam identifier with a largest quantity of TUs in the M beam identifiers other than the full-TU beam identifiers. The target beam identifier is used for reducing a quantity of bits occupied by the M beam identifiers.

It can be understood that the first information may include at least one of the following: a TU quantity indicator corresponding to a first beam identifier, a beam identifier of an optimal beam, a quantity indicator of full-TU beam identifiers, and a TU quantity indicator of a second beam identifier.

Optionally, in this embodiment of this application, the beam identifier of the optimal beam includes at least one of the following: a beam identifier corresponding to a beam with a largest quantity of TUs, and a beam identifier corresponding to a beam with a highest predicted channel quality in the N TUs.

It should be noted that the full-TU beam identifier can be understood as a beam identifier reported on all of the N TUs, or a quantity of TUs of the beam identifier is N.

Optionally, in this embodiment of this application, the beam feedback report includes two parts, a first part includes the first information, a second part includes the second information, and a size of the second part is determined based on the first information included in the first part.

Optionally, in this embodiment of this application, the TU location indicator of the beam identifier includes a TU discrete location indicator, and the TU discrete location indicator includes at least one of the following: a first bit indication and a TU location bitmap indication.

The first bit indication indicates reporting locations of the M beam identifiers in the N TUs, and the TU location bitmap (bitmap) indication indicates whether each of the M beam identifiers is reported in the N TUs.

It should be noted that the first bit indication may also be referred to as a first location indicator, to indicate reporting locations of the M beam identifiers in the N TUs.

Optionally, in this embodiment of this application, a quantity of bits occupied by the first bit indication is $R * N * \lceil \log_2 N \rceil$, and R is a quantity of beam identifiers reported by each of the N TUs.

Optionally, in this embodiment of this application, a quantity of bits occupied by the TU location bitmap indication is $M * N$. N is a quantity of time units in the beam prediction reporting window.

For example, when $R * N * \lceil \log_2 N \rceil + (M-1) * \lceil \log_2 N \rceil < (M * N)$, fewer bits are used in a discrete method (the first bit indication), and otherwise, fewer bits are used in a bitmap method (the TU location bitmap indication). For example, when N=8, an inequation $R * N * \lceil \log_2 N \rceil + (M-1) * \lceil \log_2 N \rceil < (M * N)$ becomes 24R + 3(M -1) < 8M.

An operation symbol ⌈ ⌉ in this embodiment of this application represents upward rounding.

For example, when R=4 and M=19, fewer bits are used in the discrete method. When M is larger, and R is smaller, the discrete method is more suitable. Larger M indicates a sparser bitmap of M*N. It is better to represent a specific location of 1 in a bitmap in a discrete manner than to directly represent with a bitmap.

Optionally, in this embodiment of this application, the TU location indicator of the beam identifier includes a TU consecutive location indicator, and the TU consecutive location indicator includes at least one of the following: an initial location indicator of T beam identifiers and a first indication.

The T beam identifiers include at least one of the following: the M beam identifiers, M-X beam identifiers, and M-D beam identifiers; the first indication is a termination location indicator or a TU quantity indicator of the T beam identifiers; and X is a quantity of beam identifiers of the optimal beam, D is a quantity of full-TU beam identifiers, and T, X, and D are all positive integers.

Optionally, in this embodiment of this application, a quantity of bits occupied by an initial location indicator of each of the T beam identifiers is $\lceil \log_2 N \rceil$.

Optionally, in this embodiment of this application, a quantity of bits occupied by a termination location indicator of each of the T beam identifiers is $\lceil \log_2 N \rceil$.

Optionally, in this embodiment of this application, a quantity of bits occupied by a TU quantity indicator of each of the T beam identifiers is $\lceil \log_2 N \rceil$.

It should be noted that the quantity of bits occupied by the TU quantity indicator of each of the T beam identifiers may alternatively be $\lceil \log_2 P \rceil$. It should be noted that if TUs of the M beam identities are all consecutive, each beam identifier needs to be represented by only $2*\lceil \log_2 N \rceil$ bits. If the TU discrete location indicator method is used, when an average quantity of TUs of each beam identifier is greater than 2, more than $2*\lceil \log_2 N \rceil$ bits need to be used for representation. In this case, more bits are needed in the TU discrete location indicator method.

Optionally, in this embodiment of this application, the TU location indicator of the beam identifier includes a plurality of segments of consecutive TU location indicators, or one or more segments of consecutive TU location indicators and a discrete TU location indicator.

The plurality of segments of consecutive TU location indicators include an initial location indicator of a beam identifier corresponding to each segment of consecutive TUs and a second indication, and a segment quantity indicator of consecutive TUs for each of the M beam identifiers; and the second indication is a termination location indicator of a beam identifier corresponding to the consecutive TUs or a quantity indicator of TUs in the consecutive TUs.

The segment of consecutive TU location indicator includes an initial location indicator of a beam identifier corresponding to the segment of consecutive TUs and the second indication.

The TU discrete location indicator includes a reporting location of a beam identifier corresponding to a discrete TU in the N TUs.

It should be noted that in a case that the TU location indicator of the beam identifier includes the plurality of segments of consecutive TU location indicators, the first information further includes a total segment quantity indicator of consecutive TUs corresponding to the M beam identifiers.

Optionally, in this embodiment of this application, in a case that the TU location indicator of the beam identifier includes the segment of consecutive TU location indicator and the discrete TU location indicator, the first information further includes a total quantity indicator of discrete TUs corresponding to the M beam identifiers.

Optionally, in this embodiment of this application, in a case that the TU location indicator of the beam identifier includes the plurality of segments of consecutive TU location indicators and the discrete TU location indicator, the first information further includes a total segment quantity indicator of consecutive TUs corresponding to the M beam identifiers and a total quantity indicator of discrete TUs corresponding to the M beam identifiers.

For example, it is assumed that beam identifier 1 is reported in TU1, 2, 3, 5, 7, 9 and 10, and beam identifier 2 is reported in TU4, 6 and 8. R=1, N=10.

Method a: one segment of consecutive TU location indicator and a discrete TU location indicator:
the second information includes:

a start location of consecutive TUs of beam identifier 1 is TU1, and an end location of consecutive TUs of beam identifier 1 is TU3; and a start location of consecutive TUs of beam identifier 2 is TU4, and an end location of consecutive TUs of beam identifier 2 is TU4;
reporting of discrete TU locations: TU5, 7, 9, 10, 6, and 8; and
reporting of a quantity of discrete TUs of each of the M beam identifiers: 4 and 2.

The first information includes the total quantity indicator of discrete TUs: 6;

a quantity 2 of discrete TUs of beam identifier 2 in the second information may or may not be included in the second information, and is obtained by subtracting a discrete TU quantity indicator of beam identifier 1 from a total quantity indicator of discrete TUs in the first information, that is, 6-4=2; and
a reason why the total quantity indicator of discrete TUs is added to the first information is that the quantity of discrete TUs is changed by $\lceil \log_2(RN) \rceil$ because of consecutive reporting.

Method b: a plurality of segments of consecutive reporting:
the second information includes:

a start location of consecutive TUs of beam identifier 1 is TU1, 5, 7, and 9, and an end location of consecutive TUs of beam identifier 1 is TU3, 5, 7, and 10; and a start location of consecutive TUs of beam identifier 2 is TU4, 6, and 8, and an end location of consecutive TUs of beam identifier 2 is TU4, 6, and 8; and indication reporting of a quantity of segments of consecutive TUs of each of the M beam identifiers: 4 and 3.

Indication reporting of a total quantity of segments of consecutive TUs corresponding to the M beam identifiers added to the first information: 7; and a segment quantity indicator 3 of consecutive TUs of beam identifier 2 in the second information may or may not be included in the second information, and is obtained by subtracting a quantity of segments of consecutive TUs of beam identifier 1 from a total quantity of segments of consecutive TUs in the first information, that is, 7-4=3.

Method c: a plurality of segments of consecutive reporting+discrete reporting:
the second information includes:

a start location of consecutive TUs of beam identifier 1 is TU1 and 9, and an end location of consecutive TUs of beam identifier 1 is TU3 and 10;
indication reporting of a quantity of segments of consecutive TUs of each of the M beam identifiers: 2 and 0;
reporting of discrete TU locations: TU5, 7, 4, 6, and 8;
reporting of a quantity of discrete TUs of each of the M beam identifiers: 2 and 3; the first information further needs to include a total quantity of segments of consecutive TUs and a total quantity of discrete TUs, to indicate a quantity of segments that are consecutive and a quantity of segments that are discrete;
the total quantity of segments of consecutive TUs: 2;
the total quantity of discrete TUs: 5;
a segment quantity indicator 0 of consecutive TUs of beam identifier 2 in the second information may or may not be included in the second information, and is obtained by subtracting a quantity of segments of consecutive TUs of beam identifier 1 from a total quantity of segments of consecutive TUs in the first information, that is, 2-2=0; and
a quantity 3 of discrete TUs of beam identifier 2 in the second information may or may not be included in the second information, and is obtained by subtracting a discrete TU quantity indicator of beam identifier 1 from a total quantity indicator of discrete TUs in the first information, that is, 5-2=3.

Optionally, in this embodiment of this application, the TU quantity indicator of the beam identifier includes at least one of the following: a TU quantity indicator of each of M or first M-1 beam identifiers and a TU quantity indicator of remaining beam identifiers; and the remaining beam identifiers include any one of the following:

a beam identifier in the M beam identifiers other than a third beam identifier;
a beam identifier in the M beam identifiers other than the third beam identifier and a last beam identifier; and
a beam identifier in the M beam identifiers other than the third beam identifier, the last beam identifier, and a beam identifier of the optimal beam.

The third beam identifier includes any one of the following: a first beam identifier, a full-TU beam identifier, and a full-TU beam identifier and a second beam identifier.

Optionally, in this embodiment of this application, in a case that the TU quantity indicator includes the TU quantity indicator of each of the first M-1 beam identifiers, a quantity of TU locations corresponding to an $M^{th}$ beam identifier in the M beam identifiers is obtained by subtracting a sum of quantities of TU locations corresponding to the first M-1 beam identifiers from a first quantity, the first quantity is $R * N$, and $R$ is a quantity of beam identifiers reported by each of the N TUs.

Optionally, in this embodiment of this application, a quantity of bits occupied by a TU quantity indicator of each of the M or first M-1 beam identifiers is $\lceil \log_2 N \rceil$.

Optionally, in this embodiment of this application, a quantity of bits occupied by a TU quantity indicator of each of the remaining beam identifiers is $\lceil \log_2 P \rceil$, and $P$ is a quantity of TUs of a beam identifier with a smallest TU quantity in the third beam identifier.

Optionally, in this embodiment of this application, a quantity of bits occupied by the quantity indicator of the M beam identifiers is $\lceil \log_2 (RN) \rceil$, and $R$ is a quantity of beam identifiers reported by each of the N TUs.

It should be noted that in the discrete manner, it is assumed that reporting locations of each beam identifier in the N TUs are represented in ascending order, and for example, locations of beam identifier 1 are TU1, 2, and 4, locations of beam identifier 2 are TU5 and 6, and M TU location indicators are TU1, 2, 4, 5, and 6 (M=2). In this case, if there is no TU quantity indicator of each beam identifier, a dividing line between a TU location indicator of beam identifier 1 and a TU location indicator of beam identifier 2 is unknown.

Optionally, in this embodiment of this application, a quantity of bits occupied by the TU quantity indicator corresponding to the first beam identifier is any one of the following: $\lceil \log_2 N \rceil$ and $\left\lceil \log_2 \left( N - \lceil R * N / M \rceil + 1 \right) \right\rceil$.

Optionally, in this embodiment of this application, a quantity of bits occupied by the quantity indicator of the full-TU beam identifiers is $\lceil \log_2 R \rceil$.

Optionally, in this embodiment of this application, a quantity of bits occupied by the TU quantity indicator of the second beam identifier is any one of the following: $\lceil \log_2 (N-1) \rceil$, $\left\lceil \lceil \log_2 \left( N - \lceil (R-D) * N / (M-D) \rceil \right) \rceil \right\rceil$, and $\lceil \log_2 N \rceil$, and D is a quantity of full-TU beam identifiers.

Optionally, in this embodiment of this application, a quantity of bits occupied by the beam identifier indication is $M * K$, and K is a quantity of indicator bits of each of the M beam identifiers.

Optionally, in this embodiment of this application, the first information includes the quantity indicator of the M beam identifiers, and the second information includes the beam identifier indication, the TU location indicator of the beam identifier, and the TU quantity indicator of the beam identifier. The TU location indicator of the beam identifier includes a TU discrete location indicator, and the TU discrete location indicator includes a first bit indication.

Optionally, in this embodiment of this application, a quantity of bits occupied by the first information is $\lceil \log_2 (RN) \rceil$ and R is a quantity of beam identifiers reported by each of the N TUs; and

a quantity of bits occupied by the second information is $M * K + R * N * \lceil \log_2 N \rceil + M * \lceil \log_2 N \rceil$ or $M * K + R * N * \lceil \log_2 N \rceil + (M-1) * \lceil \log_2 N \rceil$, and K is a quantity of indicator bits of each of the M beam identifiers.

Optionally, in this embodiment of this application, the first information includes the quantity indicator of the M beam identifiers and the TU quantity indicator corresponding to the first beam identifier, and the second information includes the beam identifier indication, the TU location indicator of the beam identifier, and the TU quantity indicator of the beam identifier. The TU location indicator of the beam identifier includes a TU discrete location indicator, the TU discrete location indicator includes a first bit indication, and the TU quantity indicator of the beam identifier includes a TU quantity indicator of remaining beam identifiers.

Optionally, in this embodiment of this application, the quantity of bits occupied by the first information is any one of the following:

$$\lceil \log_2 (RN) \rceil + \lceil \log_2 N \rceil ;$$

and

$$\lceil \log_2 (RN) \rceil + \left\lceil \log_2 \left( N - \lceil R * N / M \rceil + 1 \right) \right\rceil ,$$

where R is a quantity of beam identifiers reported by each of the N TUs; and

a quantity of bits occupied by the second information is $M * K + R * N * \lceil \log_2 N \rceil + (M-1) * \lceil \log_2 P \rceil$ or $M * K + R * N * \lceil \log_2 N \rceil + (M-2) * \lceil \log_2 P \rceil$, K is a quantity of indicator bits of each of the M beam identifiers, P is a quantity of TUs of a third beam identifier, and the third beam identifier is a first beam identifier.

Optionally, in this embodiment of this application, the first information includes the quantity indicator of the M beam identifiers, and the second information includes the beam identifier indication and the TU location indicator of the beam identifier. The TU location indicator of the beam identifier includes a TU discrete location indicator, and the TU discrete location indicator includes a TU location bitmap indication.

Optionally, in this embodiment of this application, a quantity of bits occupied by the first information is

$$\lceil \log_2 (RN) \rceil$$

, and $R$ is a quantity of beam identifiers reported by each of the N TUs; and

a quantity of bits occupied by the second information is $M * K + M * N$, and $K$ is a quantity of indicator bits of each of the M beam identifiers.

Optionally, in this embodiment of this application, the first information includes the quantity indicator of the M beam identifiers, and the second information includes the beam identifier indication.

Optionally, in this embodiment of this application, a quantity of bits occupied by the first information is

$$\lceil \log_2 (RN) \rceil$$

, and $R$ is a quantity of beam identifiers reported by each of the N TUs; and

a quantity of bits occupied by the second information is $M * K$, and $K$ is a quantity of indicator bits of each of the M beam identifiers.

Optionally, in this embodiment of this application, the first information includes the quantity indicator of the M beam identifiers, and the second information includes the beam identifier indication and the TU location indicator of the beam identifier.

The TU location indicator of the beam identifier includes a TU consecutive location indicator, the TU consecutive location indicator includes an initial location indicator of T beam identifiers and a first indication, and the first indication is a termination location indicator or a TU quantity indicator of the T beam identifiers.

Optionally, in this embodiment of this application, a quantity of bits occupied by the first information is

$$\lceil \log_2 (RN) \rceil$$

, and $R$ is a quantity of beam identifiers reported by each of the N TUs; and

a quantity of bits occupied by the second information is $M * K + 2M * \lceil \log_2 N \rceil$ or

$M * K + (2M - 1) * \lceil \log_2 N \rceil$ , and $K$ is a quantity of indicator bits of each of the M beam identifiers.

Optionally, in this embodiment of this application, the first information includes the quantity indicator of the M beam identifiers and the TU quantity indicator corresponding to the first beam identifier, and the second information includes the beam identifier indication and the TU location indicator of the beam identifier.

The TU location indicator of the beam identifier includes a TU consecutive location indicator, and the TU consecutive location indicator includes an initial location indicator of T beam identifiers and a TU quantity indicator of remaining beam identifiers in the T beam identifiers.

Optionally, in this embodiment of this application, the quantity of bits occupied by the first information is any one of the following:

$$\lceil \log_2 (RN) \rceil + \lceil \log_2 N \rceil ;$$

and

$$\lceil \log_2 (RN) \rceil + \lceil \log_2 (N - \lceil R * N / M \rceil + 1) \rceil$$ , where $R$ is a quantity of beam identifiers reported by each of the N TUs; and

a quantity of bits occupied by the second information is $M * K + M * \lceil \log_2 N \rceil + (M - 1) * \lceil \log_2 P \rceil$ or

$M * K + M * \lceil \log_2 N \rceil + (M - 2) * \lceil \log_2 P \rceil$ , $K$ is a quantity of indicator bits of each of the M beam identifiers, $P$ is a quantity of TUs of a third beam identifier, the third beam identifier is a full-TU beam identifier, and $P = N$.

Optionally, in this embodiment of this application, the first information includes the quantity indicator of the M beam identifiers and the quantity indicator of the full-TU beam identifiers, and the second information includes the beam identifier indication and the TU location indicator of the beam identifier.

The TU location indicator of the beam identifier includes a TU consecutive location indicator, the TU consecutive location indicator includes an initial location indicator of T beam identifiers and a first indication, and the first indication is a termination location indicator or a TU quantity indicator of the T beam identifiers.

Optionally, in this embodiment of this application, a quantity of bits occupied by the first information is

$$\lceil \log_2 (RN) \rceil + \lceil \log_2 R \rceil$$, and $R$ is a quantity of beam identifiers reported by each of the N TUs; and a quantity of bits occupied by the second information is $$M * K + 2(M - D) * \lceil \log_2 N \rceil$$ or

$$M * K + (2(M - D) - 1) * \lceil \log_2 N \rceil$$, $K$ is a quantity of indicator bits of each of the M beam identifiers, and $D$ is a quantity of full-TU beam identifiers.

Optionally, in this embodiment of this application, the first information includes the quantity indicator of the M beam identifiers, the quantity indicator of the full-TU beam identifiers, and the TU quantity indicator of the second beam identifier, and the second information includes the beam identifier indication and the TU location indicator of the beam identifier.

The TU location indicator of the beam identifier includes a TU consecutive location indicator, the TU consecutive location indicator includes an initial location indicator of T beam identifiers and a first indication, and the first indication is a TU quantity indicator of remaining beam identifiers in the T beam identifiers.

Optionally, in this embodiment of this application, the quantity of bits occupied by the first information is any one of the following:

$$\lceil \log_2 (RN) \rceil + \lceil \log_2 R \rceil + \lceil \log_2 N \rceil ;$$

$$\lceil \log_2 (RN) \rceil + \lceil \log_2 R \rceil + \lceil \log_2 (N-1) \rceil ;$$

and

$$\lceil \log_2 (RN) \rceil + \lceil \log_2 R \rceil + \left\lceil \lceil \log_2 (N - \lceil (R-D) * N / (M-D) \rceil) \rceil \right\rceil ,$$

where $R$ is a quantity of beam identifiers reported by each of the N TUs, and $D$ is a quantity of full-TU beam identifiers; and

a quantity of bits occupied by the second information is $$M * K + (M - D) * \lceil \log_2 N \rceil + (M - D - 1) * \lceil \log_2 P \rceil$$

or $$M * K + (M - D) * \lceil \log_2 N \rceil + (M - D - 2) * \lceil \log_2 P \rceil$$, $K$ is a quantity of indicator bits of each of the M beam identifiers, $P$ is a quantity of TUs of a beam identifier with a smallest TU quantity in the third beam identifier, the third beam identifier includes a full-TU beam identifier and a second beam identifier, and P=a quantity of TUs of the second beam identifier.

Optionally, in this embodiment of this application, when M is equal to R, the M beam identifiers are repeated in all of the N TUs, and R is a quantity of beam identifiers reported by each of the N TUs.

Optionally, in this embodiment of this application, when M is equal to R, a quantity of bits occupied by the first information is $$\lceil \log_2 (RN) \rceil$$; and a quantity of bits occupied by the second information is $$M * K * \lceil \log_2 (RN) \rceil$$.

Optionally, in this embodiment of this application, when M is equal to $R * N$, each of the M beam identifiers occupies one TU.

Optionally, in this embodiment of this application, when M is equal to $R * N$, a quantity of bits occupied by the first information is $$\lceil \log_2 (RN) \rceil$$; and a quantity of bits occupied by the second information is $M * K$.

Optionally, in this embodiment of this application, the first information includes the quantity indicator of the M beam identifiers and X optimal beam identifiers, and the second information includes T beam identifier indications and TU location indicators of M beam identifiers.

X is a quantity of pre-configured optimal beams, the TU location indicator of the beam identifier includes a TU consecutive location indicator, the TU consecutive location indicator includes an initial location indicator of M beam identifiers and a first indication, and the first indication is a TU quantity indicator of remaining beam identifiers in the M beam identifiers.

Optionally, in this embodiment of this application, a quantity of bits occupied by the first information is $\lceil \log_2(RN) \rceil + X * K$, R is a quantity of beam identifiers reported by each of the N TUs, and X is a quantity of pre-configured optimal beams; and a quantity of bits occupied by the second information is $(M-X)*K + 2M*\lceil \log_2 N \rceil$ or $(M-X)*K + (2M-1)*\lceil \log_2 N \rceil$, K is a quantity of indicator bits of each of the M beam identifiers, and X is a quantity of pre-configured optimal beams.

Optionally, in this embodiment of this application, the first information further includes a third indication.

A reporting method of the first information includes Y reporting methods, and the third indication indicates the reporting method used for the first information by using $\lceil \log_2 Y \rceil$ bits; and/or a reporting method of the second information includes Z reporting methods, and the third indication indicates the reporting method used for the second information by using $\lceil \log_2 Z \rceil$ bits; and both Y and Z are positive integers.

An embodiment of this application provides a beam prediction reporting method. UE may send a beam feedback report, and the beam feedback report includes first information and second information of M beam identifiers. The first information includes at least one of the following: a quantity indicator of the M beam identifiers, a quantity indicator of target beam identifiers, and a beam identifier of an optimal beam. The second information includes at least one of the following: a beam identifier indication, a TU location indicator of a beam identifier, and a TU quantity indicator of a beam identifier. In this solution, after performing beam prediction, UE reports related information of M beam identifiers corresponding to N TUs corresponding to a beam prediction reporting window in the form of beam feedback report, that is, beam reporting includes two parts, namely, the first information and the second information. Therefore, in this solution, time correlation of M beam identifiers corresponding to beam prediction is used to compress an overhead of beam identifier reporting, thereby reducing the overhead of beam identifier reporting.

The first information, the second information, and related solutions are described below through specific implementations (Implementations 1 to 6).

Implementation 1: Discontinuous reporting manner

Beam reporting is divided into two parts.

A first part includes: a quantity M of different beam identifiers included in a beam prediction reporting window (namely, the quantity indicator of the M beam identifiers); and a quantity of bits required to indicate M is $\lceil \log_2(RN) \rceil$.

A second part includes: a beam identifier indication, a time unit discrete location indicator (namely, the TU discrete location indicator, including the first bit indication), and a time unit quantity indicator (namely, the TU quantity indicator of the beam identifier). The beam identifier indication is used for determining different M beam identifiers included in the beam prediction reporting window, and the time unit discrete location indicator is used for determining TU location information of different M beam identifiers in N TUs included in the beam prediction reporting window. The time unit quantity indicator is used for determining a quantity of pieces of TU location information included in each of the different M beam identifiers.

A quantity of bits of the beam identifier indication is $M * K$; a quantity of bits of the time unit location indicator is $\lceil \log_2 N \rceil$; a quantity of bits of the time unit discrete location indicator is $R * N * \lceil \log_2 N \rceil$; and a quantity of bits of the time unit quantity indicator includes one of the following: $M * \lceil \log_2 N \rceil$ and $(M-1) * \lceil \log_2 N \rceil$.

Optionally, a quantity of time unit location indicators corresponding to an Mth beam identifier is obtained by subtracting a sum of quantities of time unit location indicators corresponding to first M-1 beam identifiers from a total quantity $R * N$. In this case, the quantity of bits of the time unit quantity indicator is $(M-1) * \lceil \log_2 N \rceil$.

As shown in Table 1, a quantity of bits occupied by the first part (first information) is $\lceil \log_2(RN) \rceil$; and a quantity of bits occupied by the second part (second information) is one of the following:

$$M*K+R*N*\lceil \log_2 N \rceil + M*\lceil \log_2 N \rceil;$$

and

$$M*K+R*N*\lceil \log_2 N \rceil + (M-1)*\lceil \log_2 N \rceil.$$

**Table 1**

| Reporting manner | First part | Second part |
|---|---|---|
| Manner 1 | Quantity indicator of M beam identifiers $\lceil \log_2(RN) \rceil$ | Beam identifier indication+First bit indication+Time unit quantity indicator $M*K+R*N*\lceil \log_2 N \rceil + M*\lceil \log_2 N \rceil$; $M*K+R*N*\lceil \log_2 N \rceil + (M-1)*\lceil \log_2 N \rceil$, |

For example, as shown in FIG. 3, a discontinuous reporting manner is shown. Reported beam identifiers include beam identifier 1 to beam identifier M. Filled areas in FIG. 3 represent TUs used for reporting the beam identifiers, that is, TUs for reporting all beam identifiers. For example, beam identifier 1 is reported in TU1, 2, and 4, that is, TU location information of beam identifier 1 in N TUs is TU1, 2, and 4; beam identifier 2 is reported in TU2 and 5, that is, TU location information of beam identifier 2 in N TUs is TU2 and 5; and a quantity of TUs of beam identifier 1 is 3, and a quantity of TUs of beam identifier 2 is 2. Other beam identifiers in FIG. 3 are not listed herein.

Implementation 2: Discontinuous reporting manner

Beam reporting is divided into two parts.
A first part includes: a quantity M of different beam identifiers included in a beam prediction reporting window (namely, the quantity indicator of the M beam identifiers), and a quantity P of time unit location indicators corresponding to a first beam identifier (namely, the TU quantity indicator corresponding to the first beam identifier), where

the first beam identifier is a beam identifier corresponding to a largest quantity of time unit location indicators in the M beam identifiers. A quantity of bits indicating P (the TU quantity indicator corresponding to the first beam identifier) is one of the following:

(a) $\lceil \log_2 N \rceil$; and
(b) if a value range of P is an average quantity of TUs of M beam identifiers to N, a quantity of indicator bits is

$$\lceil \log_2(N - \lceil R*N/M \rceil + 1) \rceil, \text{ where}$$

a quantity of bits required to indicate M is $\lceil \log_2(RN) \rceil$.

A second part includes: a beam identifier indication, a time unit discrete location indicator (namely, the TU discrete location indicator, including the first bit indication), and a time unit quantity indicator (namely, the TU quantity indicator of the beam identifier). The beam identifier indication is used for determining different M beam identifiers included in the beam prediction reporting window, and the time unit discrete location indicator is used for determining TU location information of different M beam identifiers in N TUs included in the beam prediction reporting window. The time unit quantity indicator is used for determining a quantity of pieces of TU location information included in each of the different M beam identifiers.

A quantity of bits of the beam identifier indication is $M * K$; a quantity of bits of the time unit location indicator is $\lceil \log_2 N \rceil$; and a quantity of bits of the time unit discrete location indicator is $R * N * \lceil \log_2 N \rceil$.

The time unit quantity indicator includes one of the following: a TU quantity indicator of M beam identifiers and a TU quantity indicator of first (M-1) beam identifiers. In this case, a quantity of time units of an Mth beam is obtained by subtracting a sum of quantities of TUs of first M-1 beam identifiers from a total quantity $R * N$.

A quantity of bits of the time unit quantity indicator includes a TU quantity indicator of remaining beams, and a required quantity of bits is $\lceil \log_2 P \rceil$.

As shown in Table 2, a quantity of bits occupied by the first part is one of the following:

$$\lceil \log_2 (RN) \rceil + \lceil \log_2 N \rceil;$$

and

$$\lceil \log_2 (RN) \rceil + \lceil \log_2 (N - \lceil R * N / M \rceil + 1) \rceil.$$

A quantity of bits occupied by the second part is one of the following:

$$M * K + R * N * \lceil \log_2 N \rceil + (M - 1) * \lceil \log_2 P \rceil;$$

and

$$M * K + R * N * \lceil \log_2 N \rceil + (M - 2) * \lceil \log_2 P \rceil.$$

**Table 2**

| Reporting manner | First part | Second part |
|---|---|---|
| Manner 2 | Quantity indicator of M beam identifiers+TU quantity indicator corresponding to a first beam identifier $\lceil \log_2 (RN) \rceil + \lceil \log_2 N \rceil$; $\lceil \log_2 (RN) \rceil + \lceil \log_2 (N - \lceil R * N / M \rceil + 1) \rceil$ | Beam identifier indication+First bit indication+TU quantity indicator of remaining beam identifiers $M * K + R * N * \lceil \log_2 N \rceil + (M - 1) * \lceil \log_2 P \rceil$; $M * K + R * N * \lceil \log_2 N \rceil + (M - 2) * \lceil \log_2 P \rceil$ |

Implementation 3: Discontinuous reporting manner

Beam reporting is divided into two parts.

A first part includes: a quantity M of different beam identifiers included in a beam prediction reporting window (namely, the quantity indicator of the M beam identifiers).

A second part includes: a beam identifier indication and a time unit discrete location indicator (namely, the TU discrete location indicator, and the TU discrete location indicator includes a TU location bitmap indication), where a quantity of bits of the beam identifier indication is $M * K$; and the time unit discrete location indicator indicates location information of all M beam identifiers in a beam prediction reporting window, a required quantity of bits is $M * N$, and a dimension can be two-dimensional or one-dimensional.

As shown in Table 3, a quantity of bits occupied by the first part is $\left\lceil \log_2\left(RN\right) \right\rceil$; and a quantity of bits occupied by the second part is $M * K + M * N$.

**Table 3**

| Reporting manner | First part | Second part |
|---|---|---|
| Manner 3 | Quantity indicator of M beam identifiers $\left\lceil \log_2\left(RN\right) \right\rceil$ | Beam identifier indication+TU location bitmap indication $M * K + M * N$ |

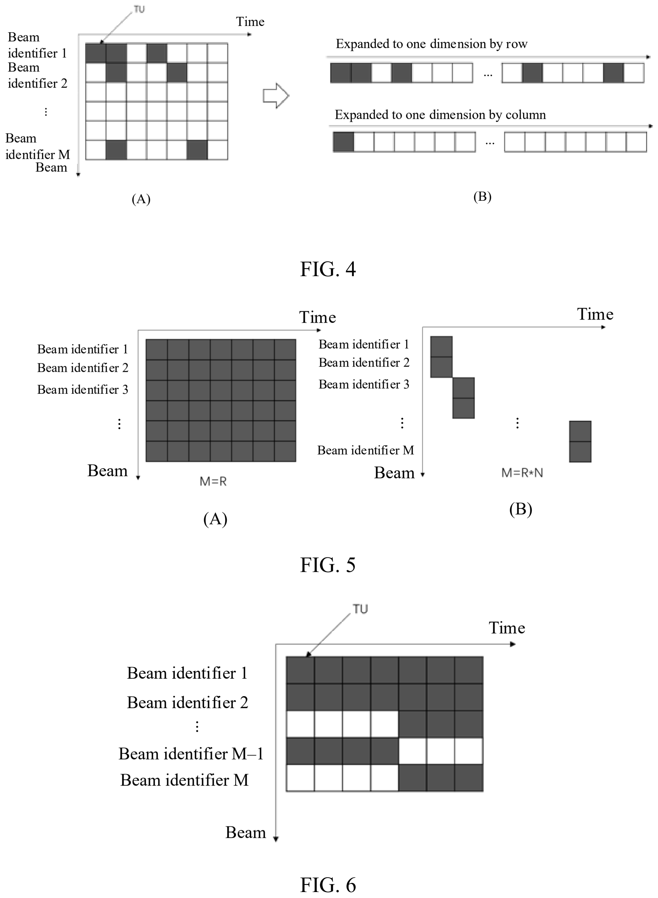

For example, as shown in FIG. 4, another discontinuous reporting manner is shown. Reported beam identifiers include beam identifier 1 to beam identifier M. A first row of (A) in FIG. 4 shows TUs in which beam identifier 1 is reported and TUs in which identifier 1 is not reported. For example, black indicates reporting, white indicates not reporting, and a TU location range is 1 to N. In this case, the first row indicates that beam identifier 1 is reported in TU1, 2, and 4, and is not reported in TU3, 5, 6 and 7.

The discontinuous reporting manner as shown in (A) of FIG. 4 is expanded to one dimension by row or by column to obtain the discontinuous reporting manner as shown in (B) of FIG. 4, to report the quantity indicator of the M beam identifiers in the first part, and report the beam identifier indication and the TU location bitmap indication in the second part.

Implementation 4: Simplified manner

Beam reporting includes two parts.

A first part includes: a quantity M of different beam identifiers included in a beam prediction reporting window (namely, the quantity indicator of the M beam identifiers);

in this case, a value of M is one of the following:

M=R (the reported M beam identifiers are repeated in all of the N TUs);

M=R*N (each of the reported M beam identifiers occupies only one TU); and

when M=R, a second part includes a beam identifier indication. In this case, a quantity of TUs corresponding to each beam identifier is N, that is, there are all full-TU beam identifiers, and there is no need to indicate a TU location and a TU quantity of the beam identifier additionally.

When M=R*N, the second part includes the beam identifier indication. In this case, a quantity of TUs of each beam identifier is 1, and a TU location may be predefined. Therefore, there is no need to feed back a TU location indicator and a TU quantity indicator.

A quantity of bits of beam identifier indication information is $M * K$.

As shown in Table 4A, a quantity of bits occupied by the first part is $\left\lceil \log_2\left(RN\right) \right\rceil$; and a quantity of bits occupied by the second part is $M * K$.

**Table 4A**

| Reporting manner | First part | Second part |
|---|---|---|
| Manner 4A | Quantity indicator of M beam identifiers $\left\lceil \log_2\left(RN\right) \right\rceil$ | Beam identifier indication $M * K$ |

For example, as shown in FIG. 5, a simplified reporting manner is shown. Reported beam identifiers include beam identifier 1 to beam identifier M. As shown in (A) of FIG. 5, M=R, and the reported M beam identifiers are repeated in all of the N TUs; and as shown in (B) of FIG. 5, M=R*N, and each of the reported M beam identifiers occupies only one TU. In this case, each beam identifier has no time continuity, that is, each TU reports R different beam identifiers. Alternatively, the first part directly reports R different beam identifiers corresponding to each TU. Degraded to background technical solution 2, as shown in table 4B below.

**Table 4B**

| Reporting manner | First part | Second part |
|---|---|---|
| Manner 4B | Beam identifier indications for R*N beams R*N*K | None |

Implementation 5: Continuous reporting manner

Beam reporting is divided into two parts.

A first part includes: a quantity M of different beam identifiers included in a beam prediction reporting window (namely, the quantity indicator of the M beam identifiers), or includes a quantity M of different beam identifiers included in the beam prediction reporting window and a quantity P of TUs of a first beam identifier, where

the first beam identifier is a beam identifier with a largest quantity of TUs in the M beam identifiers, and a quantity of bits of a TU quantity indicator of the first beam identifier is one of the following:

(a) $\lceil \log_2 N \rceil$; and

(b) if a value range of P is an average quantity of TUs of M beam identifiers to N, a quantity of indicator bits is

$$\lceil \log_2 \left( N - \lceil R*N/M \rceil + 1 \right) \rceil.$$

A second part includes: a beam identifier indication and a time unit consecutive location indicator (namely, the TU consecutive location indicator, and the TU consecutive location indicator includes an initial location indicator of T beam identifiers and a first indication).

A quantity of bits of the beam identifier indication is $M * K$.

The time unit consecutive location indicator includes one of the following:

(A) an initial time unit indication and a termination time unit indication; and
(B) an initial time unit indication and a TU quantity indicator.

A quantity of bits required for the initial time unit indication is $\lceil \log_2 N \rceil$, initial times of all of the M beam identifiers need to be indicated, and a required quantity of bits is $M * \lceil \log_2 N \rceil$; and a quantity of bits required for the termination time unit indication is $\lceil \log_2 N \rceil$, termination times of all of the M beam identifiers need to be indicated, and a required quantity of bits is $M * \lceil \log_2 N \rceil$;

the TU quantity indicator herein is one of the following:

(A) a TU quantity indicator of all of the M beam identifiers, and a required quantity of bits is $M * \lceil \log_2 N \rceil$;
(B) only quantities of TUs of M-1 beam identifiers need to be indicated, a quantity of TUs of one remaining beam identifier may be obtained by subtracting a total quantity of TUs of (M-1) beam identifiers from $R * N$, and a required quantity of bits is $(M-1) * \lceil \log_2 N \rceil$; and
(C) a TU quantity indicator of remaining beam identifiers other than the first beam identifier and a last beam identifier.

A quantity of bits of a TU quantity indicator of each of the remaining beam identifiers is $\lceil \log_2 P \rceil$.

As shown in Table 5, a quantity of bits occupied by the first part is one of the following:

$$\lceil \log_2 (RN) \rceil;$$

$$\left\lceil \log_2\left(RN\right)\right\rceil + \left\lceil \log_2 N\right\rceil ;$$

and

$$\left\lceil \log_2\left(RN\right)\right\rceil + \left\lceil \log_2\left(N - \left\lceil R*N/M\right\rceil + 1\right)\right\rceil .$$

A quantity of bits occupied by the second part is one of the following:

$$M*K + 2M*\left\lceil \log_2 N\right\rceil ;$$

$$M*K + \left(2M-1\right)*\left\lceil \log_2 N\right\rceil ;$$

$$M*K + M*\left\lceil \log_2 N\right\rceil + \left(M-1\right)*\left\lceil \log_2 P\right\rceil ;$$

and

$$M*K + M*\left\lceil \log_2 N\right\rceil + \left(M-2\right)*\left\lceil \log_2 P\right\rceil .$$

**Table 5**

| Reporting manner | First part | Second part |
|---|---|---|
| Manner 5 | Quantity indicator of M beam identifiers $$\left\lceil \log_2\left(RN\right)\right\rceil$$ | Beam identifier indication+Initial location indicator of M beam identifiers and first indication $$M*K + 2M*\left\lceil \log_2 N\right\rceil ;$$ $$M*K + \left(2M-1\right)*\left\lceil \log_2 N\right\rceil ,$$ |
| Manner 6 | Quantity indicator of M beam identifiers+TU quantity indicator corresponding to a first beam identifier $$\left\lceil \log_2\left(RN\right)\right\rceil + \left\lceil \log_2 N\right\rceil ;$$ $$\left\lceil \log_2\left(RN\right)\right\rceil + \left\lceil \log_2\left(N - \left\lceil R*N/M\right\rceil + 1\right)\right\rceil$$ | Beam identifier indication+Initial location indicator of M beam identifiers and TU quantity indicator of remaining beam identifiers $$M*K + M*\left\lceil \log_2 N\right\rceil + \left(M-1\right)*\left\lceil \log_2 P\right\rceil ;$$ $$M*K + M*\left\lceil \log_2 N\right\rceil + \left(M-2\right)*\left\lceil \log_2 P\right\rceil$$ |

For example, as shown in FIG. 6, a continuous reporting manner is shown. Reported beam identifiers include beam identifier 1 to beam identifier M, and TUs of each of the M beam identities are consecutive. For example, TUs of beam identifier 1 are TU1 to TU7, which are consecutive TUs; TUs of beam identifier M are TU5 to TU7, which are consecutive TUs; and other beam identifiers in FIG. 6 are not listed herein.

Implementation 6: Full-TU and continuous reporting manner

Beam reporting is divided into two parts.

A first part includes: a quantity M of different beam identifiers included in a beam prediction reporting window (namely, the quantity indicator of the M beam identifiers), and a quantity D of full-TU beam identifiers (namely, the quantity indicator of the full-TU beam identifiers); or the first part includes: a quantity of different beam identifiers included in the beam prediction reporting window, a quantity D of full-TU beam identifiers, and a quantity Q of TUs of a second beam identifier (namely, the TU quantity indicator of the second beam identifier), where
the second beam identifier is a beam identifier with a largest quantity of TUs in the M beam identifiers other than the full-TU beam identifiers, and a method for indicating Q is one of the following:

(A) a value range is 1 to N-1, and a required quantity of bits is $\lceil \log_2 (N-1) \rceil$;

(B) a value range is an average quantity of TUs of (M-D) beam identifiers to N-1, and a required quantity of bits is

$$\left\lceil \left\lceil \log_2 \left( N-1-\lceil (R-D)*N/(M-D) \rceil +1 \right) \right\rceil \right\rceil = \left\lceil \left\lceil \log_2 \left( N-\lceil (R-D)*N/(M-D) \rceil \right) \right\rceil \right\rceil;$$

and

(C) a value range is 1 to N, and a required quantity of bits is $\lceil \log_2 N \rceil$.

A quantity of bits required for indicating the quantity D of full-TU beam identifiers is $\lceil \log_2 R \rceil$.

A second part includes: a beam identifier indication and a time unit consecutive location indicator (namely, the TU consecutive location indicator, and the TU consecutive location indicator includes an initial location indicator of T beam identifiers and a first indication).

A quantity of bits of the beam identifier indication is *M * K*.

The time unit consecutive location indicator includes one of the following:

(A) an initial time unit indication and a termination time unit indication; and
(B) an initial time unit indication and a TU quantity indicator.

A quantity of bits required for the initial time unit indication is $\lceil \log_2 N \rceil$, initial times of all (M-D) non-full-TU beam identifiers need to be indicated, and a required quantity of bits is $(M-D)*\lceil \log_2 N \rceil$;

a quantity of bits required for the termination time unit indication is $\lceil \log_2 N \rceil$, termination times of all (M-D) non-full-TU beam identifiers need to be indicated, and a required quantity of bits is $(M-D)*\lceil \log_2 N \rceil$;
the TU quantity indicator herein is one of the following:

(A) a TU quantity indicator of all of the (M-D) non-full-TU beam identifiers, and a required quantity of bits is $(M-D)*\lceil \log_2 N \rceil$;

(B) only quantities of TUs of (M D-1) non-full-TU beam identifiers need to be indicated, a quantity of TUs of one remaining beam identifier may be obtained by subtracting a total quantity of TUs of (M-D) beam identifiers from (R-D)*N, and a required quantity of bits is $(M-D-1)*\lceil \log_2 N \rceil$;

(C) a TU quantity indicator of remaining beam identifiers other than the full-TU beam identifiers and the second beam identifier; and
(D) a TU quantity indicator of the remaining beam identifiers other than the full-TU beam identifiers, the first beam identifier, and a last beam identifier.

A quantity of bits of a TU quantity indicator of the remaining beam identifiers is $\lceil \log_2 P \rceil$.

As shown in Table 6, a quantity of bits occupied by the first part is one of the following:

$$\lceil \log_2 (RN) \rceil + \lceil \log_2 R \rceil;$$

$$\left\lceil \log_2\left(RN\right)\right\rceil + \left\lceil \log_2 R \right\rceil + \left\lceil \log_2 N \right\rceil;$$

$$\left\lceil \log_2\left(RN\right)\right\rceil + \left\lceil \log_2 R \right\rceil + \left\lceil \log_2 \left(N-1\right) \right\rceil;$$

and

$$\left\lceil \log_2\left(RN\right)\right\rceil + \left\lceil \log_2 R \right\rceil + \left\lceil \left\lceil \log_2 \left(N-\left\lceil \left(R-D\right)*N/\left(M-D\right)\right\rceil\right)\right\rceil\right\rceil.$$

A quantity of bits occupied by the second part is one of the following:

$$M*K+2\left(M-D\right)*\left\lceil \log_2 N \right\rceil;$$

$$M*K+\left(2\left(M-D\right)-1\right)*\left\lceil \log_2 N \right\rceil;$$

$$M*K+\left(M-D\right)*\left\lceil \log_2 N \right\rceil+\left(M-D-1\right)*\left\lceil \log_2 P \right\rceil;$$

and

$$M*K+\left(M-D\right)*\left\lceil \log_2 N \right\rceil+\left(M-D-2\right)*\left\lceil \log_2 P \right\rceil.$$

**Table 6**

| Reporting manner | First part | Second part |
|---|---|---|
| Manner 7 | Quantity indicator of M beam identifiers+Quantity indicator of full-TU beam identifiers $$\left\lceil \log_2\left(RN\right)\right\rceil + \left\lceil \log_2 R \right\rceil$$ | Beam identifier indication+Initial location indicator of (M-D) beam identifiers and first indication $$M*K+2\left(M-D\right)*\left\lceil \log_2 N \right\rceil$$ ; $$M*K+\left(2\left(M-D\right)-1\right)*\left\lceil \log_2 N \right\rceil$$ |
| Manner 8 | Quantity indicator of M beam identifiers+Quantity indicator of full-TU beam identifiers+TU quantity indicator of a second beam identifier $$\left\lceil \log_2\left(RN\right)\right\rceil + \left\lceil \log_2 R \right\rceil + \left\lceil \log_2 N \right\rceil;$$ $$\left\lceil \log_2\left(RN\right)\right\rceil + \left\lceil \log_2 R \right\rceil + \left\lceil \log_2 \left(N-1\right) \right\rceil;$$ $$\left\lceil \log_2\left(RN\right)\right\rceil + \left\lceil \log_2 R \right\rceil + \left\lceil \left\lceil \log_2 \left(N-\left\lceil \left(R-D\right)*N/\left(M-D\right)\right\rceil\right)\right\rceil\right\rceil$$ | Beam identifier indication+Initial location indicator of (M-D) beam identifiers and TU quantity indicator of remaining beam identifiers $$M*K+\left(M-D\right)*\left\lceil \log_2 N \right\rceil+\left(M-D-1\right)*\left\lceil \log_2 P \right\rceil;$$ $$M*K+\left(M-D\right)*\left\lceil \log_2 N \right\rceil+\left(M-D-2\right)*\left\lceil \log_2 P \right\rceil$$ |

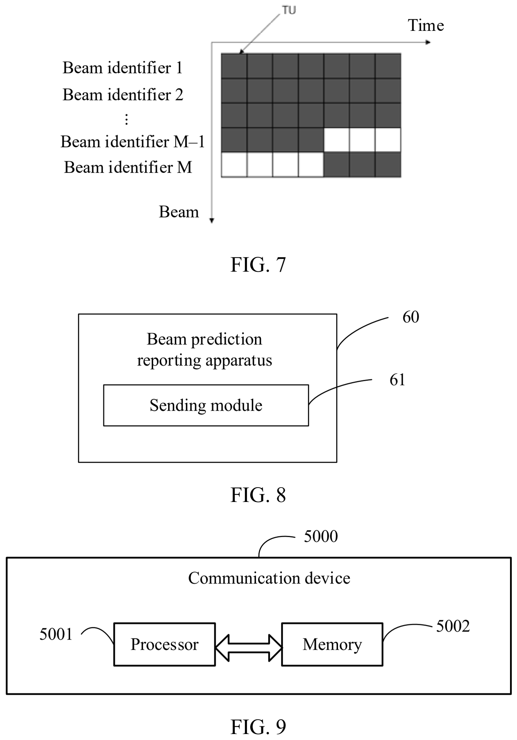

For example, as shown in FIG. 7, a full-TU and continuous reporting manner is shown. Reported beam identifiers include beam identifier 1 to beam identifier M, TUs of each of the M beam identities are consecutive, and there is a full-TU beam identifier. For example, first M-2 beam identities are full-TU beam identifiers; TUs of beam identifier M-1 are TU1 to TU4, which are consecutive TUs; and TUs of beam identifier M are TU5 to TU7, which are consecutive TUs.

Implementation 7: Continuous reporting manner

Beam reporting is divided into two parts.
A first part includes: a quantity M of different beam identifiers included in a beam prediction reporting window (namely, the quantity indicator of the M beam identifiers), and a total quantity W of segments of consecutive TUs corresponding to the M beam identifiers;

a quantity of indicator bits of M is $\left\lceil \log_2\left(RN\right)\right\rceil$, and a quantity of indicator bits of the total quantity W of segments of consecutive TUs corresponding to the M beam identifiers is $\left\lceil \log_2\left(RN\right)\right\rceil$; and

a second part includes: a beam identifier indication and a plurality of segments of consecutive TU location indicators.

The plurality of segments of consecutive TU location indicators include an initial location indicator of a beam identifier corresponding to the W segments of consecutive TUs and a second indication, and a segment quantity indicator of consecutive TUs for each of the M beam identifiers; and the second indication is a termination location indicator of a beam identifier corresponding to the consecutive TUs or a quantity indicator of TUs in the consecutive TUs.

The segment of consecutive TU location indicator includes an initial location indicator of a beam identifier corresponding to the segment of consecutive TUs and the second indication.

A quantity of bits of the beam identifier indication is *M * K*.

A quantity of bits required for the initial time unit indication is $\left\lceil \log_2 N \right\rceil$, initial times of all W segments of consecutive TUs need to be indicated, and a required quantity of bits is $W*\left\lceil \log_2 N \right\rceil$;

a quantity of bits required for the termination time unit indication is $\left\lceil \log_2 N \right\rceil$, termination times of all W segments of consecutive TUs need to be indicated, and a required quantity of bits is $W*\left\lceil \log_2 N \right\rceil$; and

a quantity of bits required for a quantity of TUs of each segment of consecutive TUs is $\left\lceil \log_2 N \right\rceil$, quantities of TUs of all W segments of consecutive TUs need to be indicated, and a required quantity of bits is $W*\left\lceil \log_2 N \right\rceil$.

A segment quantity indicator of consecutive TUs for each of the M beam identifiers is one of the following:

(A) a segment quantity indicator of consecutive TUs for all of the M beam identifiers, and a required quantity of bits is $M*\left\lceil \log_2 N \right\rceil$; and

(B) only quantities of segments of consecutive TUs of M-1 beam identifiers need to be indicated, a quantity of segments of consecutive TUs of one remaining beam identifier may be obtained by subtracting a total quantity of segments of consecutive TUs of (M-1) beam identifiers from Z, and a required quantity of bits is $\left(M-1\right)*\left\lceil \log_2 N \right\rceil$.

As shown in Table 7, a quantity of bits occupied by the first part is $2*\left\lceil \log_2\left(RN\right)\right\rceil$; and a quantity of bits occupied by the second part is one of the following:

$$M*K+2W*\left\lceil \log_2 N \right\rceil+M*\left\lceil \log_2 N \right\rceil;$$

and

$$M * K + 2W * \lceil \log_2 N \rceil + (M-1) * \lceil \log_2 N \rceil .$$

Table 7

| Reporting manner | First part | Second part |
|---|---|---|
| Manner 9 | Quantity indicator of M beam identifiers+ Total quantity W of segments of consecutive TUs corresponding to M beam identifiers $2 * \lceil \log_2 (RN) \rceil$ | Beam identifier indication+Initial location indicator of a beam identifier corresponding to W segments of consecutive TUs and second indication+Segment quantity indicator of consecutive TUs for M beam identifiers $M * K + 2W * \lceil \log_2 N \rceil + M * \lceil \log_2 N \rceil$ ; $M * K + 2W * \lceil \log_2 N \rceil + (M-1) * \lceil \log_2 N \rceil$ , |

Implementation 8: Optimal beam reporting manner

Beam reporting is divided into two parts.

A first part includes: a quantity M of different beam identifiers included in a beam prediction reporting window (namely, the quantity indicator of the M beam identifiers), and X optimal beam identifiers; and a quantity of indicator bits of M is $\lceil \log_2 (RN) \rceil$, and a quantity of bits of the X optimal beam identifiers is $X * K$.

A second part includes: a beam identifier indication, a time unit discrete location indicator (namely, the TU discrete location indicator, including the first bit indication), and a time unit quantity indicator (namely, the TU quantity indicator of the beam identifier). The beam identifier indication is used for determining different M beam identifiers included in the beam prediction reporting window, and the time unit discrete location indicator is used for determining TU location information of different M beam identifiers in N TUs included in the beam prediction reporting window. The time unit quantity indicator is used for determining a quantity of pieces of TU location information included in each of the different M beam identifiers.

A quantity of bits of the beam identifier indication is $(M-X) * K$; a quantity of bits of the time unit location indicator is $\lceil \log_2 N \rceil$; a quantity of bits of the time unit discrete location indicator is $R * N * \lceil \log_2 N \rceil$; and a quantity of bits of the time unit quantity indicator includes one of the following: $M * \lceil \log_2 N \rceil$, and $(M-1) * \lceil \log_2 N \rceil$.

Optionally, a quantity of time unit location indicators corresponding to an Mth beam identifier is obtained by subtracting a sum of quantities of time unit location indicators corresponding to first M-1 beam identifiers from a total quantity $R * N$. In this case, the quantity of bits of the time unit quantity indicator is $(M-1) * \lceil \log_2 N \rceil$.

As shown in Table 8, a quantity of bits occupied by the first part (first information) is $\lceil \log_2 (RN) \rceil + X * K$; and a quantity of bits occupied by the second part (second information) is one of the following:

$$(M-X) * K + R * N * \lceil \log_2 N \rceil + M * \lceil \log_2 N \rceil ;$$

and

$$(M-X) * K + R * N * \lceil \log_2 N \rceil + (M-1) * \lceil \log_2 N \rceil .$$

**Table 8**

| Reporting manner | First part | Second part |
|---|---|---|
| Manner 1 | Quantity indicator of M beam identifiers+X optimal beam identifiers $\lceil \log_2(RN) \rceil + X*K$ | Beam identifier indication+First bit indication+Time unit quantity indicator $(M-X)*K + R*N*\lceil \log_2 N \rceil + M*\lceil \log_2 N \rceil$ ; $(M-X)*K + R*N*\lceil \log_2 N \rceil + (M-1)*\lceil \log_2 N \rceil$ |

It should be noted that if the first part includes the X optimal beam identifiers, a beam identifier indication quantity in the beam identifiers of the second part is reduced to m-X. This implementation describes a method in which the first part further includes X optimal beam identifiers and that is combined with the implementation 1. In addition, the method in which the first part further includes X optimal beam identifiers may also be combined with the implementation 2 to the implementation 7. The method in which the first part further includes X optimal beam identifiers and that is combined with the implementation 1 is merely used as an example for description herein, and solutions in which the first part further includes X optimal beam identifiers and that are combined with any other implementation (the implementation 2 to the implementation 7) all fall within the protection scope of this application. Other combination solutions are not listed herein.

The beam prediction reporting method provided in this embodiment of this application may be alternatively executed by a beam prediction reporting apparatus. In this embodiment of this application, that UE performs the beam prediction reporting method is used as an example to describe the beam prediction reporting method provided in this embodiment of this application.

FIG. 8 is a schematic diagram of a possible structure of a beam prediction reporting apparatus according to an embodiment of this application. The beam prediction reporting apparatus is applied to UE. As shown in FIG. 8, the beam prediction reporting apparatus 60 may include a sending module 61.

The sending module 61 is configured to send a beam feedback report, the beam feedback report includes first information and second information, the first information and the second information are related information of M beam identifiers, the M beam identifiers are different beam identifiers in N TUs corresponding to a beam prediction reporting window, and both N and M are positive integers. The first information includes at least one of the following: a quantity indicator of the M beam identifiers, a quantity indicator of target beam identifiers in the M beam identifiers, and a beam identifier of an optimal beam. The second information includes at least one of the following: a beam identifier indication, a TU location indicator of a beam identifier, and a TU quantity indicator of a beam identifier; the beam identifier indication indicates beam identifiers included in the N TUs; the TU location indicator of the beam identifier indicates at least one of the following: a location of a beam identifier in the N TUs, whether a beam identifier is reported in the N TUs, and a quantity of TUs of a beam identifier; and the TU quantity indicator of the beam identifier indicates a quantity of TU locations included for each of the M beam identifiers.

An embodiment of this application provides a beam prediction reporting apparatus, and the beam prediction reporting apparatus may report, after performing beam prediction, related information of M beam identifiers corresponding to N TUs corresponding to a beam prediction reporting window in the form of beam feedback report, that is, beam reporting includes two parts, namely, the first information and the second information. Therefore, in this solution, time correlation of M beam identifiers corresponding to beam prediction is used to compress an overhead of beam identifier reporting, thereby reducing the overhead of beam identifier reporting.

In a possible implementation, the beam feedback report includes two parts, a first part includes the first information, a second part includes the second information, and a size of the second part is determined based on the first information included in the first part.

In a possible implementation, the quantity indicator of the target beam identifiers includes at least one of the following: a TU quantity indicator corresponding to a first beam identifier, a quantity indicator of full-TU beam identifiers, and a TU quantity indicator of a second beam identifier. The first beam identifier is a beam identifier corresponding to a largest quantity of TU locations in the M beam identifiers; and the second beam identifier is a beam identifier with a largest quantity of TUs in the M beam identifiers other than the full-TU beam identifiers.

In a possible implementation, the TU location indicator of the beam identifier includes a TU discrete location indicator, and the TU discrete location indicator includes at least one of the following: a first bit indication and a TU location bitmap indication. The first bit indication indicates reporting locations of the M beam identifiers in the N TUs, and the TU location bitmap indication indicates whether each of the M beam identifiers is reported in the N TUs.

In a possible implementation, a quantity of bits occupied by the first bit indication is $R*N*\lceil \log_2 N \rceil$, and R is a quantity of beam identifiers reported by each of the N TUs; and/or a quantity of bits occupied by the TU location bitmap indication is *M * N*.

In a possible implementation, the TU location indicator of the beam identifier includes a TU consecutive location indicator, and the TU consecutive location indicator includes at least one of the following: an initial location indicator of T beam identifiers and a first indication. The T beam identifiers include at least one of the following: the M beam identifiers, M-X beam identifiers, and M-D beam identifiers; the first indication is a termination location indicator or a TU quantity indicator of the T beam identifiers; and X is a quantity of beam identifiers of the optimal beam, D is a quantity of full-TU beam identifiers, and T, X, and D are all positive integers.

In a possible implementation, a quantity of bits occupied by an initial location indicator of each of the T beam identifiers is $\lceil \log_2 N \rceil$;

and/or

a quantity of bits occupied by a termination location indicator of each of the T beam identifiers is $\lceil \log_2 N \rceil$;

and/or

a quantity of bits occupied by a TU quantity indicator of each of the T beam identifiers is $\lceil \log_2 N \rceil$.

In a possible implementation, the TU location indicator of the beam identifier includes a plurality of segments of consecutive TU location indicators, or one or more segments of consecutive TU location indicators and a discrete TU location indicator. The plurality of segments of consecutive TU location indicators include an initial location indicator of a beam identifier corresponding to each segment of consecutive TUs and a second indication, and a segment quantity indicator of consecutive TUs for each of the M beam identifiers; the second indication is a termination location indicator of a beam identifier corresponding to the consecutive TUs or a quantity indicator of TUs in the consecutive TUs; the segment of consecutive TU location indicator includes an initial location indicator of a beam identifier corresponding to the segment of consecutive TUs and the second indication; and the TU discrete location indicator includes a reporting location of a beam identifier corresponding to a discrete TU in the N TUs.

In a possible implementation, in a case that the TU location indicator of the beam identifier includes the plurality of segments of consecutive TU location indicators, the first information further includes a total segment quantity indicator of consecutive TUs corresponding to the M beam identifiers;

or in a case that the TU location indicator of the beam identifier includes the segment of consecutive TU location indicator and the discrete TU location indicator, the first information further includes a total quantity indicator of discrete TUs corresponding to the M beam identifiers;

or in a case that the TU location indicator of the beam identifier includes the plurality of segments of consecutive TU location indicators and the discrete TU location indicator, the first information further includes a total segment quantity indicator of consecutive TUs corresponding to the M beam identifiers and a total quantity indicator of discrete TUs corresponding to the M beam identifiers.

In a possible implementation, the TU quantity indicator of the beam identifier includes at least one of the following: a TU quantity indicator of each of M or first M-1 beam identifiers and a TU quantity indicator of remaining beam identifiers; and the remaining beam identifiers include any one of the following:

a beam identifier in the M beam identifiers other than a third beam identifier;

a beam identifier in the M beam identifiers other than the third beam identifier and a last beam identifier; and

a beam identifier in the M beam identifiers other than the third beam identifier, the last beam identifier, and a beam identifier of the optimal beam, where

the third beam identifier includes any one of the following: a first beam identifier, a full-TU beam identifier, and a full-TU beam identifier and a second beam identifier.

In a possible implementation, in a case that the TU quantity indicator includes the TU quantity indicator of each of the first M-1 beam identifiers, a quantity of TU locations corresponding to an Mth beam identifier in the M beam identifiers is obtained by subtracting a sum of quantities of TU locations corresponding to the first M-1 beam identifiers from a first quantity, the first quantity is *R * N,* and *R* is a quantity of beam identifiers reported by each of the N TUs.

In a possible implementation, a quantity of bits occupied by a TU quantity indicator of each of the M or first M-1 beam identifiers is $\lceil \log_2 N \rceil$;

and/or

a quantity of bits occupied by a TU quantity indicator of each of the remaining beam identifiers is $\lceil \log_2 P \rceil$, and $P$ is a quantity of TUs of a beam identifier with a smallest TU quantity in the third beam identifier.

In a possible implementation, a quantity of bits occupied by the quantity indicator of the M beam identifiers is $\lceil \log_2 (RN) \rceil$, and $R$ is a quantity of beam identifiers reported by each of the N TUs;

and/or

a quantity of bits occupied by the TU quantity indicator corresponding to the first beam identifier is any one of the following: $\lceil \log_2 N \rceil$, $\lceil \log_2 (N-1) \rceil$, and $\lceil \log_2 (N - \lceil R*N/M \rceil + 1) \rceil$;

and/or

a quantity of bits occupied by the quantity indicator of the full-TU beam identifiers is $\lceil \log_2 R \rceil$,

and/or

a quantity of bits occupied by the TU quantity indicator of the second beam identifier is any one of the following:

$$\lceil \log_2 (N-1) \rceil, \quad \lceil \lceil \log_2 (N - \lceil (R-D)*N/(M-D) \rceil) \rceil \rceil, \text{ and } \lceil \log_2 N \rceil$$, and D is a quantity of full-TU beam identifiers.

In a possible implementation, a quantity of bits occupied by the beam identifier indication is $M * K$, and $K$ is a quantity of indicator bits of each of the M beam identifiers.

In a possible implementation, the first information includes the quantity indicator of the M beam identifiers, and the second information includes the beam identifier indication, the TU location indicator of the beam identifier, and the TU quantity indicator of the beam identifier. The TU location indicator of the beam identifier includes a TU discrete location indicator, and the TU discrete location indicator includes a first bit indication.

In a possible implementation, a quantity of bits occupied by the first information is $\lceil \log_2 (RN) \rceil$, and $R$ is a quantity of beam identifiers reported by each of the N TUs; and

a quantity of bits occupied by the second information is $M * K + R * N * \lceil \log_2 N \rceil + M * \lceil \log_2 N \rceil$ or

$M * K + R * N * \lceil \log_2 N \rceil + (M-1) * \lceil \log_2 N \rceil$, and $K$ is a quantity of indicator bits of each of the M beam identifiers.

In a possible implementation, the first information includes the quantity indicator of the M beam identifiers and the TU quantity indicator corresponding to the first beam identifier, and the second information includes the beam identifier indication, the TU location indicator of the beam identifier, and the TU quantity indicator of the beam identifier. The TU location indicator of the beam identifier includes a TU discrete location indicator, the TU discrete location indicator includes a first bit indication, and the TU quantity indicator of the beam identifier includes a TU quantity indicator of remaining beam identifiers.

In a possible implementation, the quantity of bits occupied by the first information is any one of the following:

$$\lceil \log_2 (RN) \rceil + \lceil \log_2 N \rceil;$$

and

$$\lceil \log_2 (RN) \rceil + \lceil \log_2 (N - \lceil R*N/M \rceil + 1) \rceil,$$

where $R$ is a quantity of beam identifiers reported by each of the N TUs; and

a quantity of bits occupied by the second information is $M*K+R*N*\lceil\log_2 N\rceil+(M-1)*\lceil\log_2 P\rceil$ or

$M*K+R*N*\lceil\log_2 N\rceil+(M-2)*\lceil\log_2 P\rceil$, $K$ is a quantity of indicator bits of each of the M beam identifiers, $P$ is a quantity of TUs of a third beam identifier, and the third beam identifier is a first beam identifier.

In a possible implementation, the first information includes the quantity indicator of the M beam identifiers, and the second information includes the beam identifier indication and the TU location indicator of the beam identifier. The TU location indicator of the beam identifier includes a TU discrete location indicator, and the TU discrete location indicator includes a TU location bitmap indication.

In a possible implementation, a quantity of bits occupied by the first information is $\lceil\log_2(RN)\rceil$, and $R$ is a quantity of beam identifiers reported by each of the N TUs; and

a quantity of bits occupied by the second information is $M*K+M*N$, and $K$ is a quantity of indicator bits of each of the M beam identifiers.

In a possible implementation, the first information includes the quantity indicator of the M beam identifiers, and the second information includes the beam identifier indication.

In a possible implementation, a quantity of bits occupied by the first information is $\lceil\log_2(RN)\rceil$, and $R$ is a quantity of beam identifiers reported by each of the N TUs; and

a quantity of bits occupied by the second information is $M*K$, and $K$ is a quantity of indicator bits of each of the M beam identifiers.

In a possible implementation, the first information includes the quantity indicator of the M beam identifiers, and the second information includes the beam identifier indication and the TU location indicator of the beam identifier. The TU location indicator of the beam identifier includes a TU consecutive location indicator, the TU consecutive location indicator includes an initial location indicator of T beam identifiers and a first indication, and the first indication is a termination location indicator or a TU quantity indicator of the T beam identifiers.

In a possible implementation, a quantity of bits occupied by the first information is $\lceil\log_2(RN)\rceil$, and $R$ is a quantity of beam identifiers reported by each of the N TUs; and

a quantity of bits occupied by the second information is $M*K+2M*\lceil\log_2 N\rceil$ or $M*K+(2M-1)*\lceil\log_2 N\rceil$, and $K$ is a quantity of indicator bits of each of the M beam identifiers.

In a possible implementation, the first information includes the quantity indicator of the M beam identifiers and the TU quantity indicator corresponding to the first beam identifier, and the second information includes the beam identifier indication and the TU location indicator of the beam identifier. The TU location indicator of the beam identifier includes a TU consecutive location indicator, and the TU consecutive location indicator includes an initial location indicator of T beam identifiers and a TU quantity indicator of remaining beam identifiers in the T beam identifiers.

In a possible implementation, the quantity of bits occupied by the first information is any one of the following:

$$\lceil\log_2(RN)\rceil+\lceil\log_2 N\rceil;$$

and

$$\lceil\log_2(RN)\rceil+\lceil\log_2(N-\lceil R*N/M\rceil+1)\rceil,$$

where $R$ is a quantity of beam identifiers reported by each of the N TUs; and

a quantity of bits occupied by the second information is $M*K+M*\lceil\log_2 N\rceil+(M-1)*\lceil\log_2 P\rceil$ or

$M*K+M*\lceil\log_2 N\rceil+(M-2)*\lceil\log_2 P\rceil$, $K$ is a quantity of indicator bits of each of the M beam identifiers, $P$ is a quantity of TUs of a third beam identifier, the third beam identifier is a full-TU beam identifier, and $P = N$.

In a possible implementation, the first information includes the quantity indicator of the M beam identifiers and the quantity indicator of the full-TU beam identifiers, and the second information includes the beam identifier indication and the TU location indicator of the beam identifier. The TU location indicator of the beam identifier includes a TU consecutive location indicator, the TU consecutive location indicator includes an initial location indicator of T beam identifiers and a first indication, and the first indication is a termination location indicator or a TU quantity indicator of the T beam identifiers.

In a possible implementation, a quantity of bits occupied by the first information is $\left\lceil \log_2\left(RN\right)\right\rceil + \left\lceil \log_2 R\right\rceil$, and R is a quantity of beam identifiers reported by each of the N TUs; and

a quantity of bits occupied by the second information is $M*K + 2\left(M-D\right)*\left\lceil \log_2 N\right\rceil$ or

$M*K + \left(2\left(M-D\right)-1\right)*\left\lceil \log_2 N\right\rceil$, K is a quantity of indicator bits of each of the M beam identifiers, and D is a quantity of full-TU beam identifiers.

In a possible implementation, the first information includes the quantity indicator of the M beam identifiers, the quantity indicator of the full-TU beam identifiers, and the TU quantity indicator of the second beam identifier, and the second information includes the beam identifier indication and the TU location indicator of the beam identifier. The TU location indicator of the beam identifier includes a TU consecutive location indicator, the TU consecutive location indicator includes an initial location indicator of T beam identifiers and a first indication, and the first indication is a TU quantity indicator of remaining beam identifiers in the T beam identifiers.

In a possible implementation, the quantity of bits occupied by the first information is any one of the following:

$$\left\lceil \log_2\left(RN\right)\right\rceil + \left\lceil \log_2 R\right\rceil + \left\lceil \log_2 N\right\rceil;$$

and

$$\left\lceil \log_2\left(RN\right)\right\rceil + \left\lceil \log_2 R\right\rceil + \left\lceil \left\lceil \log_2\left(N - \left\lceil \left(R-D\right)*N/\left(M-D\right)\right\rceil\right)\right\rceil\right\rceil,$$

where R is a quantity of beam identifiers reported by each of the N TUs, and D is a quantity of full-TU beam identifiers; and

a quantity of bits occupied by the second information is $M*K + \left(M-D\right)*\left\lceil \log_2 N\right\rceil + \left(M-D-1\right)*\left\lceil \log_2 P\right\rceil$

or $M*K + \left(M-D\right)*\left\lceil \log_2 N\right\rceil + \left(M-D-2\right)*\left\lceil \log_2 P\right\rceil$, K is a quantity of indicator bits of each of the M beam identifiers, P is a quantity of TUs of a beam identifier with a smallest TU quantity in the third beam identifier, the third beam identifier includes a full-TU beam identifier and a second beam identifier, and P=a quantity of TUs of the second beam identifier.

In a possible implementation, when M is equal to R, the M beam identifiers are repeated in all of the N TUs, and R is a quantity of beam identifiers reported by each of the N TUs;

or

when M is equal to R * N, each of the M beam identifiers occupies one TU.

In a possible implementation, the first information further includes a third indication. A reporting method of the first information includes Y reporting methods, and the third indication indicates the reporting method used for the first information by using $\left\lceil \log_2 Y\right\rceil$ bits; and/or a reporting method of the second information includes Z reporting methods, and the third indication indicates the reporting method used for the second information by using $\left\lceil \log_2 Z\right\rceil$ bits; and both Y and Z are positive integers.

In a possible implementation, the beam identifier includes at least one of the following: a beam angle, a beam identity indicator, a beam resource identifier, a beam resource set identifier, a beam index, a beam resource index, and a beam resource set index;

and/or

the quantity of the beam identifiers includes at least one of the following: a quantity of beam pair identifiers, a quantity of transmitted beam identifiers, and a quantity of received beam identifiers;

and/or

the beam identifier of the optimal beam includes at least one of the following: a beam identifier corresponding to a beam with a largest quantity of TUs, and a beam identifier corresponding to a beam with a highest predicted channel quality in the N TUs.

The beam prediction reporting apparatus provided in this embodiment of this application can implement the processes implemented in the method embodiment, and a same technical effect can be achieved. To avoid repetition, details are not described herein again.

The beam prediction reporting apparatus in this embodiment of this application may be UE, for example, UE with an operating system, or may be a component in the UE, for example, an integrated circuit or a chip. The UE may be a terminal, or another device other than the terminal. For example, the UE may include but is not limited to the foregoing listed types of the UE 11. The another device may be a server, a network attached storage (Network Attached Storage, NAS), and the like. This is not specifically limited in this embodiment of this application.

Optionally, as shown in FIG. 9, an embodiment of this application further provides a communication device 5000, including a processor 5001 and a memory 5002, and the memory 5002 stores a program or an instruction that can be run on the processor 5001. For example, in a case that the communication device 5000 is UE, the program or the instruction is executed by the processor 5001 to implement the steps of the method embodiment on a UE side, and a same technical effect can be achieved. To avoid repetition, details are not described herein again.

An embodiment of this application further provides UE, including a processor and a communication interface, where the communication interface is configured to send a beam feedback report, the beam feedback report includes first information and second information, the first information and the second information are related information of M beam identifiers, the M beam identifiers are different beam identifiers in N TUs corresponding to a beam prediction reporting window, and both N and M are positive integers. The first information includes at least one of the following: a quantity indicator of the M beam identifiers, a quantity indicator of target beam identifiers in the M beam identifiers, and a beam identifier of an optimal beam. The second information includes at least one of the following: a beam identifier indication, a TU location indicator of a beam identifier, and a TU quantity indicator of a beam identifier; the beam identifier indication indicates beam identifiers included in the N TUs; the TU location indicator of the beam identifier indicates at least one of the following: a location of a beam identifier in the N TUs, whether a beam identifier is reported in the N TUs, and a quantity of TUs of a beam identifier; and the TU quantity indicator of the beam identifier indicates a quantity of TU locations included for each of the M beam identifiers. This embodiment of the UE corresponds to the foregoing method embodiment on the UE side. Each implementation process and implementation of the foregoing method embodiment may be applicable to this embodiment of the UE, and a same technical effect can be achieved.

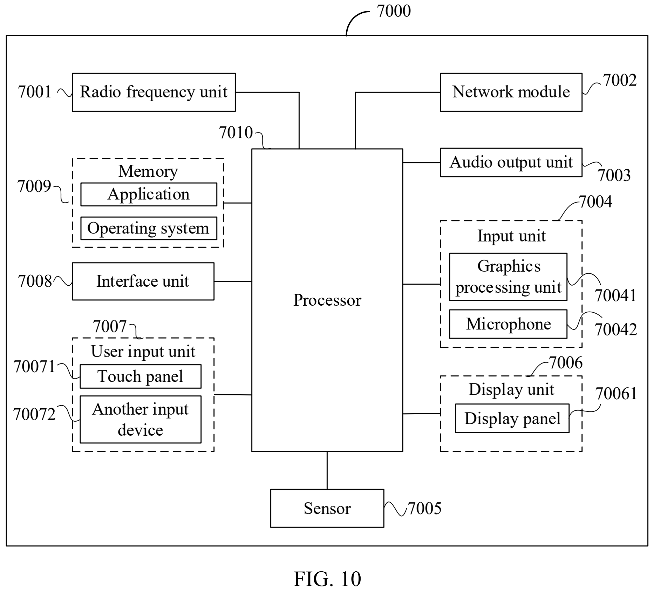

Specifically, FIG. 10 is a schematic structural diagram of hardware of UE according to an embodiment of this application.

The UE 7000 includes but is not limited to at least some of the following components: a radio frequency unit 7001, a network module 7002, an audio output unit 7003, an input unit 7004, a sensor 7005, a display unit 7006, a user input unit 7007, an interface unit 7008, a memory 7009, and a processor 7010.

A person skilled in the art can understand that the UE 7000 may further include a power supply (such as a battery) that supplies power to each component. The power supply may be logically connected to the processor 7010 by using a power supply management system, to implement functions such as charging and discharging management, and power consumption management by using the power supply management system. The structure of the UE shown in FIG. 10 constitutes no limitation on the UE, and the UE may include more or fewer components than those shown in the figure, or combine some components, or have different component arrangements. Details are not described herein.

It should be understood that, in this embodiment of this application, the input unit 7004 may include a graphics processing unit (Graphics Processing Unit, GPU) 70041 and a microphone 70042, and the graphics processing unit 70041 processes image data of a still picture or a video obtained by an image capture apparatus (such as a camera) in a video capture mode or an image capture mode. The display unit 7006 may include a display panel 70061, and the display panel 70061 may be configured in a form of a liquid crystal display, an organic light-emitting diode, or the like. The user input unit 7007 includes at least one of a touch panel 70071 and another input device 70072. The touch panel 70071 is also referred to as a touchscreen. The touch panel 70071 may include two parts: a touch detection apparatus and a touch controller. The another input device 70072 may include but is not limited to a physical keyboard, a functional button (such as a volume control button or a power on/off button), a trackball, a mouse, and a joystick. Details are not described herein.

In this embodiment of this application, after receiving downlink data from a network side device, the radio frequency unit 7001 may transmit the downlink data to the processor 7010 for processing. In addition, the radio frequency unit 7001 may send uplink data to the network side device. Generally, the radio frequency unit 7001 includes but is not limited to an antenna, an amplifier, a transceiver, a coupler, a low noise amplifier, a duplexer, and the like.

The memory 7009 may be configured to store a software program or an instruction and various data. The memory 7009 may mainly include a first storage area for storing a program or an instruction and a second storage area for storing data. The first storage area may store an operating system, and an application or an instruction required by at least one function (for example, a sound playing function or an image playing function). In addition, the memory 7009 may include a volatile memory or a non-volatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 7009 in this embodiment of this application includes but is not limited to these memories and any memory of another proper type.

The processor 7010 may include one or more processing units. Optionally, an application processor and a modem processor are integrated into the processor 7010. The application processor mainly processes an operating system, a user interface, an application, or the like. The modem processor mainly processes a wireless communication signal, for example, a baseband processor. It may be understood that, alternatively, the modem processor may not be integrated into the processor 7010.

The radio frequency unit 7001 is configured to send a beam feedback report, the beam feedback report includes first information and second information, the first information and the second information are related information of M beam identifiers, the M beam identifiers are different beam identifiers in N TUs corresponding to a beam prediction reporting window, and both N and M are positive integers. The first information includes at least one of the following: a quantity indicator of the M beam identifiers, a quantity indicator of target beam identifiers in the M beam identifiers, and a beam identifier of an optimal beam. The second information includes at least one of the following: a beam identifier indication, a TU location indicator of a beam identifier, and a TU quantity indicator of a beam identifier; the beam identifier indication indicates beam identifiers included in the N TUs; the TU location indicator of the beam identifier indicates at least one of the following: a location of a beam identifier in the N TUs, whether a beam identifier is reported in the N TUs, and a quantity of TUs of a beam identifier; and the TU quantity indicator of the beam identifier indicates a quantity of TU locations included for each of the M beam identifiers.

An embodiment of this application provides UE, and the UE may report, after performing beam prediction, related information of M beam identifiers corresponding to N TUs corresponding to a beam prediction reporting window in the form of beam feedback report, that is, beam reporting includes two parts, namely, the first information and the second information. Therefore, in this solution, time correlation of M beam identifiers corresponding to beam prediction is used to compress an overhead of beam identifier reporting, thereby reducing the overhead of beam identifier reporting.

The UE provided in this embodiment of this application can implement the processes implemented by the UE in the foregoing method embodiment, and achieve a same technical effect. To avoid repetition, details are not described herein again.

An embodiment of this application further provides a readable storage medium, where the readable storage medium stores a program or an instruction, and when the program or the instruction is executed by a processor, the processes of the foregoing beam prediction reporting method embodiment are implemented, and a same technical effect can be achieved. To avoid repetition, details are not described herein again.

The processor is a processor in the communication device in the foregoing embodiment. The readable storage medium includes a computer-readable storage medium, such as a computer read-only memory ROM, a random access memory RAM, a magnetic disk, or an optical disc. In some examples, the readable storage medium may be a non-transient readable storage medium.

An embodiment of this application further provides a chip. The chip includes a processor and a communication interface, the communication interface is coupled to the processor, and the processor is configured to run a program or an instruction to implement the processes of the foregoing method embodiment, and a same technical effect can be achieved. To avoid repetition, details are not described herein again.

It should be understood that the chip mentioned in this embodiment of this application may also be referred to as a system-level chip, a system chip, a chip system, or a system on chip.

An embodiment of this application further provides a computer program/program product. The computer program/program product is stored in a storage medium, and the computer program/program product is executed by at least one processor to implement the processes of the foregoing method embodiment, and a same technical effect can be achieved. To avoid repetition, details are not described herein again.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to this process, method, article, or apparatus. In absence of more constraints, an element preceded by "includes a..." does not preclude the existence of other identical elements in the process, method, article, or apparatus that includes the element. In addition, it should be noted that the scope of the methods and apparatuses in the implementations of this application is not limited to performing functions in the order shown or discussed, but may also include performing the functions in a basically simultaneous manner or in opposite order based on the functions involved. For example, the described methods may be performed in a different order from the described order, and various steps may be added, omitted, or combined. In addition, features described with reference to some examples may be combined in other examples.

Based on the descriptions of the foregoing implementations, a person skilled in the art may clearly understand that the method in the foregoing embodiment may be implemented by a computer software product and a required universal hardware platform, or certainly may be implemented by using hardware. The computer software product is stored in a storage medium (for example, a ROM, a RAM, a magnetic disk, or a compact disc), and includes a plurality of instructions for instructing a terminal or a network side device to perform the method described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms of implementations without departing from the purpose of this application and the protection scope of the claims, all of which fall within the protection of this application.

## Claims

1. A beam prediction reporting method, comprising:

   sending a beam feedback report, wherein the beam feedback report comprises first information and second information, the first information and the second information are related information of M beam identifiers, the M beam identifiers are different beam identifiers in N time units (TU) corresponding to a beam prediction reporting window, and both N and M are positive integers, wherein
   the first information comprises at least one of the following: a quantity indicator of the M beam identifiers, a quantity indicator of target beam identifiers in the M beam identifiers, and a beam identifier of an optimal beam; and
   the second information comprises at least one of the following: a beam identifier indication, a TU location indicator of a beam identifier, and a TU quantity indicator of a beam identifier; the beam identifier indication indicates beam identifiers comprised in the N TUs; the TU location indication of the beam identifier indicates at least one of the following: a location of a beam identifier in the N TUs, whether a beam identifier is reported in the N TUs, and a quantity of TUs of a beam identifier; and the TU quantity indicator of the beam identifier indicates a quantity of TU locations comprised for each of the M beam identifiers.

2. The method according to claim 1, wherein the beam feedback report comprises two parts, a first part comprises the first information, a second part comprises the second information, and a size of the second part is determined based on the first information comprised in the first part.

3. The method according to claim 1, wherein the quantity indicator of the target beam identifiers comprises at least one of the following: a TU quantity indicator corresponding to a first beam identifier, a quantity indicator of full-TU beam identifiers, and a TU quantity indicator of a second beam identifier, wherein
   the first beam identifier is a beam identifier corresponding to a largest quantity of TU locations in the M beam identifiers; and the second beam identifier is a beam identifier with a largest quantity of TUs in the M beam identifiers other than the full-TU beam identifiers.

4. The method according to claim 1, wherein the TU location indicator of the beam identifier comprises a TU discrete location indicator, and the TU discrete location indicator comprises at least one of the following: a first bit indication and a TU location bitmap indication, wherein
   the first bit indication indicates reporting locations of the M beam identifiers in the N TUs, and the TU location bitmap indication indicates whether each of the M beam identifiers is reported in the N TUs.

5. The method according to claim 4, wherein a quantity of bits occupied by the first bit indication is $R * N * \lceil \log_2 N \rceil$, and $R$ is a quantity of beam identifiers reported by each of the N TUs;
   and/or

a quantity of bits occupied by the TU location bitmap indication is *M * N.*

6. The method according to claim 1, wherein the TU location indicator of the beam identifier comprises a TU consecutive location indicator, and the TU consecutive location indicator comprises at least one of the following: an initial location indicator of T beam identifiers and a first indication, wherein

   the T beam identifiers comprise at least one of the following: the M beam identifiers, M-X beam identifiers, and M-D beam identifiers; the first indication is a termination location indicator or a TU quantity indicator of the T beam identifiers; and X is a quantity of beam identifiers of the optimal beam, D is a quantity of full-TU beam identifiers, and T, X, and D are all positive integers.

7. The method according to claim 6, wherein a quantity of bits occupied by an initial location indicator of each of the T beam identifiers is $\lceil \log_2 N \rceil$;
   and/or

   a quantity of bits occupied by a termination location indicator of each of the T beam identifiers is $\lceil \log_2 N \rceil$;
   and/or

   a quantity of bits occupied by a TU quantity indicator of each of the T beam identifiers is $\lceil \log_2 N \rceil$.

8. The method according to claim 1, wherein the TU location indicator of the beam identifier comprises a plurality of segments of consecutive TU location indicators, or one or more segments of consecutive TU location indicators and a discrete TU location indicator, wherein

   the plurality of segments of consecutive TU location indicators comprise an initial location indicator of a beam identifier corresponding to each segment of consecutive TUs and a second indication, and a segment quantity indicator of consecutive TUs for each of the M beam identifiers; and the second indication is a termination location indicator of a beam identifier corresponding to the consecutive TUs or a quantity indicator of TUs in the consecutive TUs;
   the segment of consecutive TU location indicator comprises an initial location indicator of a beam identifier corresponding to the segment of consecutive TUs and the second indication; and
   the TU discrete location indicator comprises a reporting location of a beam identifier corresponding to a discrete TU in the N TUs.

9. The method according to claim 8, wherein in a case that the TU location indicator of the beam identifier comprises the plurality of segments of consecutive TU location indicators, the first information further comprises a total segment quantity indicator of consecutive TUs corresponding to the M beam identifiers;
   or

   in a case that the TU location indicator of the beam identifier comprises the segment of consecutive TU location indicator and the discrete TU location indicator, the first information further comprises a total quantity indicator of discrete TUs corresponding to the M beam identifiers;
   or
   in a case that the TU location indicator of the beam identifier comprises the plurality of segments of consecutive TU location indicators and the discrete TU location indicator, the first information further comprises a total segment quantity indicator of consecutive TUs corresponding to the M beam identifiers and a total quantity indicator of discrete TUs corresponding to the M beam identifiers.

10. The method according to any one of claims 1 to 3, wherein the TU quantity indicator of the beam identifier comprises at least one of the following: a TU quantity indicator of each of M or first M-1 beam identifiers and a TU quantity indicator of remaining beam identifiers; and the remaining beam identifiers comprise any one of the following:

    a beam identifier in the M beam identifiers other than a third beam identifier;
    a beam identifier in the M beam identifiers other than the third beam identifier and a last beam identifier; and
    a beam identifier in the M beam identifiers other than the third beam identifier, the last beam identifier, and a beam identifier of the optimal beam, wherein

the third beam identifier comprises any one of the following: a first beam identifier, a full-TU beam identifier, and a full-TU beam identifier and a second beam identifier.

11. The method according to claim 10, wherein in a case that the TU quantity indicator comprises the TU quantity indicator of each of the first M-1 beam identifiers, a quantity of TU locations corresponding to an M$^{th}$ beam identifier in the M beam identifiers is obtained by subtracting a sum of quantities of TU locations corresponding to the first M-1 beam identifiers from a first quantity, the first quantity is $R * N$, and $R$ is a quantity of beam identifiers reported by each of the N TUs.

12. The method according to claim 10, wherein a quantity of bits occupied by a TU quantity indicator of each of the M or first M-1 beam identifiers is $\lceil \log_2 N \rceil$;
and/or

a quantity of bits occupied by a TU quantity indicator of each of the remaining beam identifiers is $\lceil \log_2 P \rceil$, and $P$ is a quantity of TUs of a beam identifier with a smallest TU quantity in the third beam identifier.

13. The method according to any one of claims 1 to 3, wherein a quantity of bits occupied by the quantity indicator of the M beam identifiers is $\lceil \log_2 (RN) \rceil$, and $R$ is a quantity of beam identifiers reported by each of the N TUs;
and/or

a quantity of bits occupied by the TU quantity indicator corresponding to the first beam identifier is any one of the following: $\lceil \log_2 N \rceil$, $\lceil \log_2 (N-1) \rceil$, and

$$\lceil \log_2 (N - \lceil R*N/M \rceil + 1) \rceil;$$

and/or
a quantity of bits occupied by the quantity indicator of the full-TU beam identifiers is

$$\lceil \log_2 R \rceil;$$

and/or
a quantity of bits occupied by the TU quantity indicator of the second beam identifier is any one of the following:
$\lceil \log_2 (N-1) \rceil$, $\lceil \lceil \log_2 (N - \lceil (R-D)*N/(M-D) \rceil) \rceil \rceil$, and $\lceil \log_2 N \rceil$, and D is a quantity of full-TU beam identifiers.

14. The method according to claim 1, wherein a quantity of bits occupied by the beam identifier indication is $M * K$, and $K$ is a quantity of indicator bits of each of the M beam identifiers.

15. The method according to any one of claims 1 to 14, wherein the first information comprises the quantity indicator of the M beam identifiers, and the second information comprises the beam identifier indication, the TU location indicator of the beam identifier, and the TU quantity indicator of the beam identifier, wherein
the TU location indicator of the beam identifier comprises a TU discrete location indicator, and the TU discrete location indicator comprises a first bit indication.

16. The method according to claim 15, wherein a quantity of bits occupied by the first information is $\lceil \log_2 (RN) \rceil$, and $R$ is a quantity of beam identifiers reported by each of the N TUs; and
a quantity of bits occupied by the second information is $M * K + R * N * \lceil \log_2 N \rceil + M * \lceil \log_2 N \rceil$ or

$$M * K + R * N * \lceil \log_2 N \rceil + (M-1) * \lceil \log_2 N \rceil$$ , and $K$ is a quantity of indicator bits of each of the M beam identifiers.

17. The method according to any one of claims 1 to 14, wherein the first information comprises the quantity indicator of the M beam identifiers and the TU quantity indicator corresponding to the first beam identifier, and the second information comprises the beam identifier indication, the TU location indicator of the beam identifier, and the TU quantity indicator of the beam identifier, wherein
the TU location indicator of the beam identifier comprises a TU discrete location indicator, the TU discrete location indicator comprises a first bit indication, and the TU quantity indicator of the beam identifier comprises a TU quantity indicator of remaining beam identifiers.

18. The method according to claim 17, wherein the quantity of bits occupied by the first information is any one of the following:

$$\lceil \log_2 (RN) \rceil + \lceil \log_2 N \rceil ;$$

and

$$\lceil \log_2 (RN) \rceil + \lceil \log_2 (N - \lceil R * N / M \rceil + 1) \rceil ,$$

wherein $R$ is a quantity of beam identifiers reported by each of the N TUs; and

a quantity of bits occupied by the second information is $M * K + R * N * \lceil \log_2 N \rceil + (M-1) * \lceil \log_2 P \rceil$ or $M * K + R * N * \lceil \log_2 N \rceil + (M-2) * \lceil \log_2 P \rceil$ , $K$ is a quantity of indicator bits of each of the M beam identifiers, $P$ is a quantity of TUs of a third beam identifier, and the third beam identifier is a first beam identifier.

19. The method according to any one of claims 1 to 14, wherein the first information comprises the quantity indicator of the M beam identifiers, and the second information comprises the beam identifier indication and the TU location indicator of the beam identifier, wherein
the TU location indicator of the beam identifier comprises a TU discrete location indicator, and the TU discrete location indicator comprises a TU location bitmap indication.

20. The method according to claim 19, wherein a quantity of bits occupied by the first information is $\lceil \log_2 (RN) \rceil$ , and $R$ is a quantity of beam identifiers reported by each of the N TUs; and
a quantity of bits occupied by the second information is $M * K + M * N$, and $K$ is a quantity of indicator bits of each of the M beam identifiers.

21. The method according to any one of claims 1 to 14, wherein the first information comprises the quantity indicator of the M beam identifiers, and the second information comprises the beam identifier indication.

22. The method according to claim 21, wherein a quantity of bits occupied by the first information is $\lceil \log_2 (RN) \rceil$ , and $R$ is a quantity of beam identifiers reported by each of the N TUs; and
a quantity of bits occupied by the second information is $M * K,$ and $K$ is a quantity of indicator bits of each of the M beam identifiers.

23. The method according to any one of claims 1 to 14, wherein the first information comprises the quantity indicator of the M beam identifiers, and the second information comprises the beam identifier indication and the TU location indicator of the beam identifier, wherein
the TU location indicator of the beam identifier comprises a TU consecutive location indicator, the TU consecutive location indicator comprises an initial location indicator of T beam identifiers and a first indication, and the first indication is a termination location indicator or a TU quantity indicator of the T beam identifiers.

24. The method according to claim 23, wherein a quantity of bits occupied by the first information is $\left\lceil \log_2\left(RN\right) \right\rceil$, and R is a quantity of beam identifiers reported by each of the N TUs; and

a quantity of bits occupied by the second information is $M*K+2M*\left\lceil \log_2 N \right\rceil$ or $M*K+\left(2M-1\right)*\left\lceil \log_2 N \right\rceil$, and K is a quantity of indicator bits of each of the M beam identifiers.

25. The method according to any one of claims 1 to 14, wherein the first information comprises the quantity indicator of the M beam identifiers and the TU quantity indicator corresponding to the first beam identifier, and the second information comprises the beam identifier indication and the TU location indicator of the beam identifier, wherein
the TU location indicator of the beam identifier comprises a TU consecutive location indicator, and the TU consecutive location indicator comprises an initial location indicator of T beam identifiers and a TU quantity indicator of remaining beam identifiers in the T beam identifiers.

26. The method according to claim 25, wherein the quantity of bits occupied by the first information is any one of the following:

$$\left\lceil \log_2\left(RN\right) \right\rceil+\left\lceil \log_2 N \right\rceil;$$

and

$$\left\lceil \log_2\left(RN\right) \right\rceil+\left\lceil \log_2\left(N-\left\lceil R*N/M \right\rceil+1\right) \right\rceil,$$

wherein R is a quantity of beam identifiers reported by each of the N TUs; and

a quantity of bits occupied by the second information is $M*K+M*\left\lceil \log_2 N \right\rceil+\left(M-1\right)*\left\lceil \log_2 P \right\rceil$ or $M*K+M*\left\lceil \log_2 N \right\rceil+\left(M-2\right)*\left\lceil \log_2 P \right\rceil$, K is a quantity of indicator bits of each of the M beam identifiers, P is a quantity of TUs of a third beam identifier, the third beam identifier is a full-TU beam identifier, and P = N.

27. The method according to any one of claims 1 to 14, wherein the first information comprises the quantity indicator of the M beam identifiers and the quantity indicator of the full-TU beam identifiers, and the second information comprises the beam identifier indication and the TU location indicator of the beam identifier, wherein
the TU location indicator of the beam identifier comprises a TU consecutive location indicator, the TU consecutive location indicator comprises an initial location indicator of T beam identifiers and a first indication, and the first indication is a termination location indicator or a TU quantity indicator of the T beam identifiers.

28. The method according to claim 27, wherein a quantity of bits occupied by the first information is $\left\lceil \log_2\left(RN\right) \right\rceil+\left\lceil \log_2 R \right\rceil$, and R is a quantity of beam identifiers reported by each of the N TUs; and

a quantity of bits occupied by the second information is $M*K+2\left(M-D\right)*\left\lceil \log_2 N \right\rceil$ or $M*K+\left(2\left(M-D\right)-1\right)*\left\lceil \log_2 N \right\rceil$, K is a quantity of indicator bits of each of the M beam identifiers, and D is a quantity of full-TU beam identifiers.

29. The method according to any one of claims 1 to 14, wherein the first information comprises the quantity indicator of the M beam identifiers, the quantity indicator of the full-TU beam identifiers, and the TU quantity indicator of the second beam identifier, and the second information comprises the beam identifier indication and the TU location indicator of the beam identifier, wherein

the TU location indicator of the beam identifier comprises a TU consecutive location indicator, the TU consecutive location indicator comprises an initial location indicator of T beam identifiers and a first indication, and the first indication is a TU quantity indicator of remaining beam identifiers in the T beam identifiers.

30. The method according to claim 29, wherein the quantity of bits occupied by the first information is any one of the following:

$$\lceil \log_2(RN) \rceil + \lceil \log_2 R \rceil + \lceil \log_2 N \rceil ;$$

$$\lceil \log_2(RN) \rceil + \lceil \log_2 R \rceil + \lceil \log_2(N-1) \rceil ;$$

and

$$\lceil \log_2(RN) \rceil + \lceil \log_2 R \rceil + \lceil \lceil \log_2(N - \lceil (R-D)*N/(M-D) \rceil) \rceil \rceil ,$$

wherein $R$ is a quantity of beam identifiers reported by each of the N TUs, and $D$ is a quantity of full-TU beam identifiers; and

a quantity of bits occupied by the second information is

$$M*K+(M-D)*\lceil \log_2 N \rceil +(M-D-1)*\lceil \log_2 P \rceil \qquad \text{or}$$

$$M*K+(M-D)*\lceil \log_2 N \rceil +(M-D-2)*\lceil \log_2 P \rceil , K \text{ is a quantity of indicator bits of each of the}$$

M beam identifiers, $P$ is a quantity of TUs of a beam identifier with a smallest TU quantity in the third beam identifier, the third beam identifier comprises a full-TU beam identifier and a second beam identifier, and P=a quantity of TUs of the second beam identifier.

31. The method according to any one of claims 1 to 30, wherein when M is equal to R, the M beam identifiers are repeated in all of the N TUs, and R is a quantity of beam identifiers reported by each of the N TUs;
or
when M is equal to $R * N$, each of the M beam identifiers occupies one TU.

32. The method according to any one of claims 1 to 31, wherein the first information further comprises a third indication;

a reporting method of the first information comprises Y reporting methods, and the third indication indicates the reporting method used for the first information by using $\lceil \log_2 Y \rceil$ bits; and/or
a reporting method of the second information comprises Z reporting methods, and the third indication indicates the reporting method used for the second information by using $\lceil \log_2 Z \rceil$ bits; and both Y and Z are positive integers.

33. The method according to any one of claims 1 to 32, wherein the beam identifier comprises at least one of the following:
a beam angle, a beam identity indicator, a beam resource identifier, a beam resource set identifier, a beam index, a beam resource index, and a beam resource set index;
and/or

the quantity of the beam identifiers comprises at least one of the following: a quantity of beam pair identifiers, a quantity of transmitted beam identifiers, and a quantity of received beam identifiers;
and/or

the beam identifier of the optimal beam comprises at least one of the following: a beam identifier corresponding to a beam with a largest quantity of TUs, and a beam identifier corresponding to a beam with a highest predicted channel quality in the N TUs.

34. A beam prediction reporting apparatus, comprising a sending module, wherein

the sending module is configured to send a beam feedback report, the beam feedback report comprises first information and second information, the first information and the second information are related information of M beam identifiers, the M beam identifiers are different beam identifiers in N time units (TU) corresponding to a beam prediction reporting window, and both N and M are positive integers, wherein
the first information comprises at least one of the following: a quantity indicator of the M beam identifiers, a quantity indicator of target beam identifiers in the M beam identifiers, and a beam identifier of an optimal beam; and
the second information comprises at least one of the following: a beam identifier indication, a TU location indicator of a beam identifier, and a TU quantity indicator of a beam identifier; the beam identifier indication indicates beam identifiers comprised in the N TUs; the TU location indicator of the beam identifier indicates at least one of the following: a location of a beam identifier in the N TUs, whether a beam identifier is reported in the N TUs, and a quantity of TUs of a beam identifier; and the TU quantity indicator of the beam identifier indicates a quantity of TU locations comprised for each of the M beam identifiers.

35. User equipment (UE), comprising a processor and a memory, wherein the memory stores a program or an instruction that excutable on the processor, and when the program or the instruction is executed by the processor, the steps of the beam prediction reporting method according to any one of claims 1 to 33 are implemented.

36. A readable storage medium, wherein the readable storage medium stores a program or an instruction, and when the program or the instruction is executed by a processor, the steps of the beam prediction reporting method according to any one of claims 1 to 33 are implemented.

FIG. 1

UE performs beam prediction

201

The UE sends a beam feedback report, the beam feedback report includes first information and second information, the first information and the second information are related information of M beam identifiers, and the M beam identifiers are different beam identifiers in N TUs corresponding to a beam prediction reporting window

202

FIG. 2

TU

Time

Beam identifier 1

Beam identifier 2

⋮

Beam identifier M

Beam

FIG. 3

FIG. 4

FIG. 5

FIG. 6

FIG. 7

FIG. 8

FIG. 9

7000

| | |
|---|---|
| 7001 — Radio frequency unit | Network module — 7002 |
| | 7010 |
| 7009 — Memory: Application, Operating system | Audio output unit — 7003 |
| 7008 — Interface unit | Input unit — 7004: Graphics processing unit — 70041, Microphone — 70042 |
| 7007 — User input unit: 70071 — Touch panel, 70072 — Another input device | Display unit — 7006: Display panel — 70061 |
| | Processor |
| | Sensor — 7005 |

FIG. 10

## INTERNATIONAL SEARCH REPORT

| International application No. |
|---|
| **PCT/CN2024/076705** |

### A. CLASSIFICATION OF SUBJECT MATTER

H04W 24/10(2009.01)i

According to International Patent Classification (IPC) or to both national classification and IPC

### B. FIELDS SEARCHED

Minimum documentation searched (classification system followed by classification symbols)

IPC: H04W, H04L, H04Q

Documentation searched other than minimum documentation to the extent that such documents are included in the fields searched

Electronic data base consulted during the international search (name of data base and, where practicable, search terms used)

CNABS, CNTXT, ENTXTC, WPABSC, 3GPP: 波束, 预测, 测量, 上报, 报告, 反馈, 标识, 个数, 数目, 数量, 时间单位, 时间单元, 位置, beam?, measur+, report+, feedback, identification, identifier, number, time w unit, TU

### C. DOCUMENTS CONSIDERED TO BE RELEVANT

| Category* | Citation of document, with indication, where appropriate, of the relevant passages | Relevant to claim No. |
|---|---|---|
| A | CN 114765799 A (VIVO MOBILE COMMUNICATION CO., LTD.) 19 July 2022 (2022-07-19)<br>description, paragraphs [0050]-[416], and figures 1-8 | 1-36 |
| A | CN 114390580 A (VIVO MOBILE COMMUNICATION CO., LTD.) 22 April 2022 (2022-04-22)<br>entire document | 1-36 |
| A | WO 2019029689 A1 (VIVO MOBILE COMMUNICATION CO., LTD.) 14 February 2019 (2019-02-14)<br>entire document | 1-36 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 April 2024** | **23 April 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/076705**

| Patent document cited in search report | | | Publication date (day/month/year) | Patent family member(s) | Publication date (day/month/year) |
|---|---|---|---|---|---|
| CN | 114765799 | A | 19 July 2022 | None | |
| CN | 114390580 | A | 22 April 2022 | None | |
| WO | 2019029689 | A1 | 14 February 2019 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310132569